# EUROPÄISCHE PATENTSCHRIFT

(11) **EP 4 045 171 B1**
(45) Veröffentlichungstag und Bekanntmachung des Hinweises auf die Patenterteilung: **02.12.2026**
(21) Anmeldenummer: 20790290.9
(22) Anmeldetag: 13.10.2020
(51) Int. Cl.: B01D 46/24, B01D 39/16, B01D 46/52

(54) **FILTERELEMENT, FILTERELEMENTHALTERUNG FÜR EIN FILTERELEMENT, EINE FILTERVORRICHTUNG, UND EIN VERFAHREN ZUR HERSTELLUNG EINES FILTERELEMENTS**
FILTER ELEMENT, HOLDER FOR FILTER ELEMENT , FILTER DEVICE AND METHOD OF FABRICATION OF THE FILTER ELEMENT
ELEMENT FILTRANT, FIXATION DE ELEMENT FILTRANT, DISPOSITIF DE FILRATION ET METHODE DE FABRICATION D'UN ELEMENT FILTRANT

(30) Priorität: 15.10.2019 DE 102019127739
(43) Veröffentlichungstag der Anmeldung: 24.08.2022
(73) Patentinhaber: Herding GmbH Filtertechnik, 92224 Amberg (DE)
(72) Erfinder: HERDING, Walter, 92256 Hahnbach (DE); HERDING, Urs, Amberg 92224 (DE); KOLLER, Egid, 92245 Theuern (DE); STAUBER, Alexander, 92224 Amberg (DE)
(74) Vertreter: Schmitt-Nilson Schraud Waibel Wohlfrom Patentanwälte Partnerschaft mbB
(86) Internationale Anmeldenummer: PCT/EP2020/078762
(87) Internationale Veröffentlichungsnummer: WO 2021/074139

(56) Entgegenhaltungen:
- EP-A1- 0 250 801
- WO-A1-2018/009480
- WO-A1-98/46327
- CN-A- 103 089 714
- CN-A- 103 566 638
- DE-A1- 102016 105 104
- US-A1- 2005 178 097
- US-A1- 2011 192 126
- US-B1- 7 294 163
- US-B2- 8 580 006

## Beschreibung

Die Erfindung betrifft ein Filterelement, eine Kombination aus Filterelement und Filterelementhalterung, eine Filtervorrichtung, und ein Verfahren zur Herstellung eines Filterelements.

Solche Filterelemente werden in der Industrie in Fabriken und Anlagen verschiedenster Industriezweige, bspw. in der Automobilindustrie, der Chemieindustrie, der Lebensmittelindustrie oder bei der Herstellung von Baustoffen, eingesetzt.

Durchströmungsporöse, eigenstabile Filterelemente der erfindungsgemäßen Art können einen Filterkörper aus zusammengesinterten Polyethylenteilchen oder für Einsatztemperaturen bei höheren Termperaturen aus einem temperaturbeständigeren Kunststoff, etwa Polyphenylensulfid, aufweisen.

Die Filterelemente weisen einen Filterkörper auf, an dem ein Filterkopf ausgebildet ist. Mit dem Filterkopf wird das Filterelement in einer Filtervorrichtung befestigt. Der Filterkopf muss sowohl das Abdichten als auch das Halten in der Filtervorrichtung gewährleisten. Deswegen wird bei den bekannten Filterelementen der Filterkopf als ein eigenes Bauteil gefertigt und mit dem Filterkörper verbunden, etwa durch Anspritzen des Filterkopfes an den Filterkörper. Zudem wird der Filterkopf noch durch Metalleinlagen verstärkt. Wegen der sich ergebenden komplexen Konstruktion des Filterkopfes ist der Herstellungsprozess für die bekannten Filterelemente bisher nur schwer automatisierbar.

Aus der DE 10 2016 105 104 A1 und der WO 98/46327 A1 sind Filterelemente bekannt, bei denen eine Dichtung, die dazu ausgebildet ist, das Filterelement gegenüber einer Filterelementhalterung abzudichten, auf einer Stirnseite einer Kopfstruktur des Filterelments angeordnet ist. Bei dieser Ausbildung werden über die Dichtung Lagerkräfte übertragen, um das Filterelement sicher in der Filterelementhalterung zu befestigen und zu lagern.

Aus den Druckschriften US 7 294 163 B1, US 2011/192126 A1, US 8 580 006 B2, WO 2018/009480 A1 und US 2005/178097 A1 sind weitere Filterelemente bekannt, bei denen über eine Dichtung zum Abdichten des Filterelements gegenüber einer Filterelementhalterung Lagerkräfte übertragen werden, um das Filterelement sicher in der Filterelementhalterung zu befestigen und zu lagern.

Die CN 103 566 638 A zeigt eine zylinderförmige Filterkartusche für Fluide wie Diesel oder Öl, die in einem Hydraulikmotor zirkulieren. Als Filtermedium für die Filterkartusche ist ein nicht eigenstabiles flächiges Material vorgesehen, das auf einen Filterhalter aufgespannt ist. Insbesondere kann als Filtermedium eines der folgenden Materialien verwendet werde: Zellulose, insbesondere Papier oder Pappe, Filz, Vlies, Gewebe.

Es ist daher eine Aufgabe der vorliegenden Erfindung, ein Filterelement bereitzustellen, welches leichter herzustellen ist, insbesondere in einem besser automatisierbaren Fertigungsprozess.

Diese Aufgabe wird erfindungsgemäß gelöst durch ein Filterelement gemäß Anspruch 1, eine Kombination aus Filterelement und Filterelementhalterung gemäß Anspruch 10 und ein Verfahren zum Herstellen eines Filterelements gemäß Anspruch 14.

Das erfindungsgemäße Filterelement weist einen sich zwischen einem Kopfende und einem in Längsrichtung gegenüber liegenden Fußende erstreckenden durchströmungsporösen Filterkörper auf. Am Kopfende des Filterkörpers ist eine mit einer Filterelementhalterung einer Filtervorrichtung zusammenwirkende Kopfstruktur ausgebildet, welche wenigstens eine Dichtung aufweist, die dazu ausgebildet ist, das Filterelement gegenüber einer Filterelementhalterung abzudichten. Die Kopfstruktur hat eine grundsätzlich in Längsrichtung verlaufende Seitenwand und die Dichtung ist an dieser grundsätzlich in Längsrichtung verlaufenden Seitenwand der Kopfstruktur des Filterelements ausgebildet.

Ferner betrifft die vorliegende Erfindung eine Filterelementhalterung zur Aufnahme eines erfindungsgemäßen Filterelements mit einer Trägerplatte, die wenigstens eine Filterelementaufnahme aufweist, in die das erfindungsgemäße Filterelement einsetzbar ist, und zwar derart, dass das Filterelement mit seiner Kopfstruktur in der Filterelementaufnahme sitzt.

Ein weiterer Aspekt der vorliegenden Erfindung betrifft eine Kombination aus dem erfindungsgemäßen Filterelement und der erfindungsgemäßen Filterelementhalterung. Das Filterelement ist dabei so in die Filterelementhalterung einsetzbar, dass das Filterelement im eingesetzten Zustand einen Rohfluidraum von einem Reinfluidraum einer Filtervorrichtung trennt. Die Seitenwand der Kopfstruktur weist eine Dichtung auf, die mit der Filterelementaufnahme zusammenwirkt, um das Filterelement gegenüber der Filterelementhalterung abzudichten, insbesondere in Zusammenwirkung mit einem mit einem quer zur Längsrichtung verlaufenden Dichtungselement.

Die Erfindung betrifft darüber hinaus eine Filtervorrichtung, welche einen Rohfluidraum, einen Reinfluidraum und die erfindungsgemäße Kombination aus Filterelement und Filterelementhalterung aufweist. Das Filterelement ist in eine in der Filterelementhalterung ausgebildete Filterelementaufnahme eingesetzt, und zwar derart dass das Filterelement im eingesetzten Zustand den Rohfluidraum von dem Reinfluidraum trennt.

Ein zusätzlicher Aspekt der Erfindung betrifft ein Verfahren zur Herstellung eines erfindungsgemäßen Filterelements. Das Verfahren umfasst das Herstellen eines durchströmungsporösen und eigenstabilen Filterkörpers und das Ausbilden einer Kopfstruktur an dem Filterkörper, wobei die Kopfstruktur mit wenigstens einer Dichtung versehen wird, die derart ausgebildet ist, dass sie mit einer Filterelementhalterung einer Filtervorrichtung zusammenwirkt, um einen Reinfluidraum gegenüber einem Rohfluidraum der Filtervorrichtung abzudichten. Die Dichtung wird insbesondere an einer in Längsrichtung verlaufenden Seitenwand der Kopfstruktur ausgebildet. Die Herstellung des Filterelements kann automatisiert erfolgen.

Das erfindungsgemäße Filterelement ist leichter herstellbar als bekannte Filterelemente. Insbesondere ist eine vollständig automatisierte Fertigung des Filterelements realisierbar, weil die Kopfstruktur keine besonderen Verstärkungen erfordert. Insbesondere kann die Kopfstruktur aus demselben Material gefertigt werden wie der Filterkörper, falls gewünscht sogar im selben Herstellungsprozess.

Das Filterelement ist insbesondere dazu vorgesehen, an einer Filterelementhalterung einer Filtervorrichtung gelagert zu werden. Die Filterelementhalterung trennt gemeinsam mit dem darin eingebauten Filterelement eine Reinfluidseite von einer Rohfluidseite der Filtervorrichtung. Im eingebauten Zustand ist das Filterelement an der Filterelementhalterung befestigt und wird von dieser getragen. Die erfindungsgemäße Anordnung der Dichtung an einer in Längsrichtung verlaufenden Seitenwand der Kopfstruktur lässt eine Konfiguration zu, in der die Dichtung im eingebauten Zustand lediglich zur Ausbildung einer genügend fluiddichten Abdichtung in Zusammenwirkung mit einer Gegen-Dichtstruktur an der Filterelementhalterung führt. Es ist aber nicht mehr erforderlich, dass die Zusammenwirkung von Dichtung und Gegen-Dichtstruktur auch für eine Halterung oder Befestigung des Filterelements an der Filterelementhalterung sorgt, oder eine solche Halterung oder Befestigung in erheblichem Maß unterstützt. Vielmehr kann das erfindungsgemäße Filterelement so konstruiert sein, dass die Funktion, das Filterelement sicher in der Filterelementhalterung zu befestigen und zu lagern, anderen Teilen oder Strukturen an der Kopfstruktur zukommt als der Dichtung. Diese Bauweise erlaubt es, die Kopfstruktur ganz aus nur einem Material, insbesondere einem Kunststoffmaterial herzustellen. Insbesondere kann die Kopfstruktur nunmehr aus demselben Kunststoffmaterial hergestellt werden wie der Filterkörper. Es ist nicht mehr erforderlich, in der Kopfstruktur zusätzliche Verstärkungselemente oder Versteifungsstrukturen vorzusehen, weil die Funktionen Bereitstellen von Dichtigkeit und Halten/Befestigen des Filterelements in der Filterelementhalterung von verschiedenen Teilen der Kopfstruktur erfüllt werden

Beispielsweise kann das Filterelement einschließlich Kopfstruktur vollständig in demselben Sinterverfahren hergestellt werden, in dem auch der Filterkörper hergestellt wird. Es ist lediglich dafür zu sorgen, dass im Zuge des Sinterverfahrens die in Längsrichtung verlaufende Seitenwand der Kopfstruktur ausgebildet wird und diese mit der Dichtung versehen wird. Dies kann während des Sinterns des Filterkörpers erfolgen (zum Beispiel durch entsprechende Strukturierung eines Bereichs der Seitenwand, der eine dichtende Anlagefläche bilden soll), oder aber auch anschließend an das Sintern (z.B. durch Bereitstellen eines separaten mit der Seitenwand zusammenwirkenden Dichtungselements).

Das Filterelement ist eigenstabil, d.h. der Filterkörper besitzt an sich bereits genügend Steifigkeit, um es zu erlauben, dass das Filterelement aufgestellt werden kann. Damit werden grundsätzlich keine weiteren Stützstrukturen benötigt, um das Filterelement in einer Filtervorrichtung aufzubauen. Der Filterkörper des Filterelements ist durchströmungsporös und erlaubt (ggf. mit Hilfe einer zusätzlichen Oberflächenbeschichtung) die Filterung eines Rohfluids, welches Fremdstoffe und/oder Fremdkörper mit sich transportiert beim Durchtritt durch das Filterelement. Die Fremdstoffe verbleiben an dem durchströmungsporösen Filterkörper auf der Rohfluidseite. Eine Abreinigungsvorrichtung kann eingesetzt werden, um den Filterkörper von den Fremdstoffen zu befreien. Beispielsweise kann hierzu eine nach dem Druckluft-Impulsprinzip arbeitende Abreinigungsvorrichtung vorgesehen sein, die das Filterelement mit Druckluftimpulsen beaufschlagt, insbesondere im Gegenstromprinzip in entgegengesetzter Richtung zur Strömungsrichtung des von dem Filterelement auf seiner Reinfluidseite abströmenden Reinfluids.

Als Kopfende des Filterelements soll insbesondere dasjenige Ende des Filterelements bezeichnet werden, welches im in einer Filtervorrichtung eingebauten Zustand des Filterelements der Filterelementhalterung nahe liegt. Die Kopfstruktur ermöglicht einerseits eine sichere Befestigung des Filterelements in der Filterelementhalterung und andererseits im eingebauten Zustand des Filterelements auch eine gute Abdichtung zwischen Reinfluidseite und Rohfluidseite der Filtervorrichtung.

Eine Fläche, die in Längsrichtung des Filterelements verläuft, erstreckt sich parallel zu der Richtung, in der das Filterelement in die Filterelementhalterung eingesetzt wird bzw. aus der Filterelementhalterung entfernt wird. Mit der Formulierung "die Fläche verläuft im Wesentlichen in Längsrichtung" soll zum Ausdruck gebracht werden, dass die Fläche nicht exakt parallel zur Längsrichtung sein muss, sondern sich auch in in einem spitzen Winkel geneigt zur Längsrichtung erstrecken kann, beispielsweise in einem Winkel von bis zu 15 Grad zur Längsrichtung. Beispielsweise kann die Längsrichtung die Achse eines Pyramidenstumpfes oder Kegelstumpfes sein, wobei die an der Kopfstruktur ausgebildete Seitenfläche auf der Mantelfläche dieses Pyramidenstumpfes oder Kegelstumpfes liegt.

Die Dichtung kann beim Einsetzen des Filterelements in die Filterelementhalterung zwar in einen gewissen kraftschlüssigen und/oder formschlüssigen Eingriff mit der Gegen-Dichtstruktur der Filterelementhalterung gelangen, so dass ausreichende Dichtigkeit gegenüber Durchtritt des Rohfluids auf die Reinfluidseite bzw. umgekehrt, gegeben ist. Das bedeutet, dass über die Dichtung eine gewisse Vorspannung übertragen wird, um einen dichten Sitz zwischen der Dichtung an der Kopfstruktur des Filterelements und der damit zusammenwirkenden Gegen-Dichtstruktur an der Filterelementhalterung herzustellen. Dagegen müssen keine Kräfte - jedenfalls keine signifikanten Kräfte - zum Halten, Befestigen, Sichern, und oder Lagern des Filterelements in der Filterelementhalterung, insbesondere zur Sicherung des Filterelements gegenüber Verlagerung in Längsrichtung, durch die Zusammenwirkung von Dichtung und Gegen-Dichtstruktur übertragen werden. Insbesondere sollen Dichtung und Gegen-Dichtstruktur sogar von der Übertragung solcher Kräfte entlastet sein. Zur Sicherung des Filterelements gegenüber Verlagerung in Längsrichtung können andere Bereiche der Kopfstruktur vorgesehen sein oder kann die Kopfstruktur andere Halteanordnungen aufweisen.

Im einfachsten Fall kann die an der Kopfstruktur vorgesehene Dichtung die Konfiguration einer an einer Außenseite der Seitenwand ausgebildeten Anlagefläche aufweisen, die im eingebauten Zustand in dichtende Anlage mit einer entsprechenden Gegen-Anlagefläche der Filterelementhalterung gelangt. Um eine bessere Abdichtung zu erzielen, können Anlagefläche und Gegen-Anlagefläche eine komplexere Struktur oder Geometrie aufweisen, beispielsweise in der Art einer Labyrinthdichtung. Es bietet sich jedoch an, zwischen der Seitenwand der Kopfstruktur des Filterelements und der damit zusammenwirkenden Gegen-Dichtfläche an der Filterelementhalterung kann eine Dichtung auszubilden, die ein zwischen diesen Elementen angeordnetes Dichtungselement aufweist, z.B. einen Dichtring oder eine Dichtmasse. Die Dichtungswirkung kann durch eine spezielle Geometrie von Seitenwand und/oder Gegen-Dichtstruktur verbessert werden, etwa so dass im eingebauten Zustand eine gewisse Vorspannung auf das Dichtungselement ausgeübt wird.

Die Dichtung kann wenigstens teilweise um eine in der Kopfstruktur ausgebildete Reinfluidaustrittsöffnung umlaufend, insbesondere ganz umlaufend, an der Seitenwand der Kopfstruktur ausgebildet sein. Die Dichtung kann insbesondere die Reinfluidaustrittsöffnung ringförmig umgeben. Wie bereits ausgeführt, nimmt die Dichtung im eingebauten Zustand des Filterelements keine oder nur geringe Haltekräfte auf und braucht deswegen nicht besonders massiv oder stabil ausgebildet sein.

Die Dichtung kann insbesondere ein quer zur Längsrichtung verlaufendes Dichtungselement aufweisen, um das Filterelement gegenüber der Filterelementhalterung abzudichten. Ein solches Dichtungselement sorgt besonders effektiv für Trennung eines Rohfluidraums, in dem sich das Rohfluid befindet, von einem Reinfluidraum, in dem sich das Reinfluid befindet.

In der Seitenwand kann eine Vertiefung zur Aufnahme des Dichtungselements ausgebildet sein, beispielsweise eine als Nut ausgebildete Vertiefung. Die Vertiefung kann insbesondere grundsätzlich orthogonal zur Längsrichtung verlaufen, beispielsweise so, dass die in der Seitenwand ausgebildete Nut die Reinfluidaustrittsöffnung ringartig umgibt. Durch eine solche Vertiefung kann eine sichere Positionierung des Dichtungselements an der Seitenwand gewährleistet werden, auch dann, wenn beim Einbau des Filterelements in die Filterelementhalterung eine Vorspannung auf das Dichtungselement ausgeübt wird.

Beispielsweise kann das Filterelement ein quer zur Längsrichtung verlaufendes Dichtungselement aufweisen, das mit der Seitenwand, insbesondere mit der Vertiefung, zusammenwirkt, um das Filterelement gegenüber der Filterelementhalterung abzudichten. Das Dichtungselement kann aus einem üblicherweise für Dichtungen verwendeten Material mit elastomeren Eigenschaften hergestellt sein, beispielsweise aus synthetischem Kautschuk (Äthylen-Propylen-Dien-Kautschuck EPDM, Fluor-Kautschuk FKM/FPM, Acrylnitril-Butadien-Kautschuk NBR), thermoplastischem Polyurethan, Polytetrafluorethylen, Polyacetal, Silikon. Das Dichtungselement kann, bezogen auf einen Querschnitt des Dichtungselements, beispielsweise als O-Ring, Delta-Ring, X-Ring, oder T-Ring ausgebildet sein. Das Dichtungselement kann aber auch eine Faserdichtung oder eine angeschäumte Dichtung umfassen. Es ist ebenfalls denkbar, dass das Dichtungselement in Umfangsrichtung um die Kopfstruktur herum einen sich ändernden Querschnitt aufweist. Beispielsweise kann in Bereichen der Kopfstruktur, an denen mit einer besonders großen Wärmedehnung des Filterelements bei Betriebstemperatur zu rechnen ist, das Dichtungselement einen größeren Querschnitt aufweisen als in anderen Bereichen. Auf diese Weise steht in Bereichen, in denen eine stärkere Wärmedehnung des Filterelements erwartet wird, mehr elastische Masse des Dichtungselements zur Verfügung, um diese Wärmedehnung aufzunehmen.

Obwohl grundsätzlich ein einziges Dichtungselement ausreicht, jedenfalls dann wenn das Dichtungselement die Reinfluidaustrittsöffnung vollständig umgibt, kann in bestimmten Ausführungsformen die Seitenwand sogar mehrere Vertiefungen aufweisen, so dass mehrere Dichtungselemente an der Kopfstruktur angebracht werden können. Dadurch kann die Dichtigkeit zwischen dem Filterelement und der Filterelementaufnahme erhöht werden. Es ist auch möglich, mehrere Dichtungselemente, die je für sich die Reinfluidaustrittsöffnung nicht vollständig umgeben, in Richtung des Umfangs der Reinfluidaustrittsöffnung versetzt zueinander anzuordnen.

Die Reinfluidaustrittsöffnung kann in einer am Kopfende des Filterkörpers angeordneten Stirnwand ausgebildet sein. Zur Vermeidung von Strömungsverlusten des vom Filterelement weg strömenden Reinfluids kann die Reinfluidaustrittsöffnung einen Großteil der Stirnwand einnehmen, insbesondere 80 Prozent oder mehr. Es kann auch genügen, wenn die Reinfluidaustrittsöffnung nur einen Teil der Stirnwand einnimmt, beispielsweise etwa 70 bis 80 Prozent der Stirnwand.

Das Filterelement kann eine taschenförmige Gestalt besitzen mit wenigstens drei Seitenwänden, insbesondere wenigstens vier Seitenwänden, sowie wenigstens einer Fußstirnwand, die die Seitenwände miteinander an einem dem Kopfende gegenüber liegenden Fußende verbindet. Die taschenförmige Gestalt kann einen eckigen oder abgerundeten Querschnitt aufweisen. Insbesondere kann die taschenförmige Gestalt auch einen ovalen oder runden Querschnitt aufweisen, so dass das Filterelement eine eher röhrenförmige Gestalt wie bei einer Filterpatrone annimmt. Am Kopfende des Filterelements ist in einer Kopfstirnwand die Reinfluidaustrittsöffnung ausgebildet. Die Seitenwände verlaufen im Wesentlichen parallel zu einer Einsteckrichtung, in der sich das Filterelement bewegt, wenn es in die Filterelementhalterung eingesetzt wird. Im Normalfall ist die Strömungsrichtung des vom Filterelement weg strömenden Reinfluids bis zum Erreichen der Reinfluidaustrittsöffnung parallel zu der Einsteckrichtung. Die Stirnwände verlaufen grundsätzlich quer zur Längsrichtung, insbesondere orthogonal zur Längsrichtung, und außerdem quer zur Strömungsrichtung des vom Filterelement weg strömenden Reinfluids. Die wenigstens eine Fußstirnwand bildet insbesondere einen Fuß der Filtertasche aus.

Wenn das Filterelement vier Seitenwände aufweist, kann das Filterelement die Gestalt eines schmalen und breiten Kastens haben, mit zwei breiten Seitenwänden und zwei schmalen Seitenwänden, welche die zwei breiten Seitenwände miteinander verbinden. Die schmalen Seitenwände können orthogonal zu den breiten Seitenwänden verlaufen. Die breiten Seitenwände verlaufen in Längs- und Breitenrichtung des Filterelements. Die schmalen Seitenwände verlaufen in Längs- und Tiefenrichtung des Filterelements.

Bei Ausführungsformen, in denen ein mit der Anlagefläche der Kopfstruktur zusammenwirkendes Dichtungselement vorgesehen ist, kann das Dichtungselement im Bereich der schmalen Seitenwände einen größeren Querschnitt aufweisen als im Bereich der breiten Seitenwände. Durch diese Aufdickung des Dichtungselements im Bereich der schmalen Seitenwände kann eine verstärkte Wärmedehnung des Filterelements bei höheren Temperaturen, beispielsweise bei 50°C oder mehr, aufgenommen werden. Im Bereich der Aufdickung stellt das Dichtungselement mehr elastische Masse bereit, die bei Ausdehnung des Filterelements komprimiert werden kann, um einen Längenausgleich zu erzielen. Da die Wärmedehnung des Filterelements vor allem in Richtung der breiten Seitenwände erfolgt, reicht es aus, das Dichtungselement im Bereich der schmalen Seitenwände mit größerem Querschnitt auszuführen.

Ein Bereich der Seitenwände kann den Filterkörper ausbilden. Ggfs. kann auch die Fußstirnwand einen Teil des Filterkörpers ausbilden. Die Fußstirnwand kann auch eine Versteifung und/oder Montageführung für das Filterelement bereitstellen.

Zwischen den Seitenwänden kann ein Reinfluidraum ausgebildet sein, in dem ein aus einem Rohfluid nach Durchtritt durch die Seitenwände gebildetes Reinfluid abströmt. Die Seitenwände mit der Fußstirnwand bilden somit eine Filtertasche aus. Die Seitenwände verlaufen grundsätzlich in Längsrichtung, also parallel zur Längsrichtung. Alternativ können die Seitenwände in einem spitzen Winkel zu der Längsrichtung verlaufen, insbesondere in einem Winkel kleiner oder gleich 15° und insbesondere vom Fußende zum Kopfende auseinander laufend, wobei die am Kopfende gebildete Stirnwand eine größere Fläche aufweist als die Fußstirnwand.

Das Reinfluid tritt durch die Reinfluidaustrittsöffnung aus dem Filterelement aus. Durch die Reinfluidaustrittsöffnung kann auch der Druckluftimpuls, der mit der Abreinigungsvorrichtung erzeugt wird, gegen die Strömung des Reinfluids in das Filterelement eingeleitet werden, insbesondere zu den Seitenwänden und/oder Stirnwänden, die die Filteroberfläche des Filterelements bilden.

Wenigstens eine der zwei breiten Seitenwände kann zick-zack-artig oder gewellt ausgebildet sein, wobei Berge und Täler einen Verlauf grundsätzlich in Längsrichtung des Filterelements haben. Berge und Täler verlaufen grundsätzlich von dem Kopfende des Filterelements zu dem Fußende des Filterelements.

Die Berge und Täler in der Kopfstruktur können in Richtung zu der Reinfluidauslassöffnung hin abflachen, so dass der Reinfluidauslass im Wesentlichen einen rechteckigen Querschnitt für die Reinfluidströmung aufweist. Dabei kann der Querschnitt für die Reinfluidströmung am größten an der Austrittsöffnung (d.h. am Reinfluidauslass) sein, wo der Querschnitt nahezu rechteckig ist.

Die Kopfstruktur kann zum Fixieren und Halten des Filterelements an der Filterelementhalterung ausgebildet sein. Eine zusätzliche Haltevorrichtung des Filterelements ist somit nicht zwingend erforderlich.

Zur Ausbildung einer Haltestruktur kann die Kopfstruktur wenigstens einen nach außen ragenden Vorsprung bilden, der dazu ausgebildet ist, mit einer an der Filterelementhalterung ausgebildeten Gegen-Haltestruktur zusammenzuwirken, um das Filterelement gegenüber Verlagerung in Längsrichtung zu sichern, insbesondere gegenüber Verlagerung in Einsteckrichtung. Die Richtungsangabe "nach außen" ist dabei auf die Längsrichtung bezogen, insbesondere orthogonal zur Längsrichtung, also in Breitenrichtung und/oder in Tiefenrichtung. Der Vorsprung nimmt dabei im eingebauten Zustand Kräfte zur Halterung oder Fixierung des Filterelements in der Filterelementhalterung auf, insbesondere gegenüber Verlagerung in Längsrichtung.

Die Kopfstruktur kann dabei wenigstens eine der Seitenwände (breite Seitenwände und/oder schmale Seitenwände) wenigstens in einem Abschnitt derselben nach außen überragen, so dass die Kopfstruktur selbst einen Vorsprung bildet, der eine zu dem Fußende des Filterelements gerichtete Stirnfläche ausbildet, die mit einer an der Filterelementhalterung ausgebildeten Gegen-Stirnfläche zusammenwirkt, um das Filterelement gegenüber Verlagerung in Längsrichtung zu sichern, insbesondere gegenüber Verlagerung in Einsteckrichtung.

Das Filterelement kann durch Anlage der zu dem Fußende des Filterelements gerichteten Stirnfläche mit der Gegen-Stirnfläche der Filterelementhalterung in der Filterelementhalterung einer Filtervorrichtung einhängbar sein.

Ein in der Kopfstruktur gebildeter Hohlraum, der die Reinfluidaustrittsöffnung und den Hohlraum bzw. Reinfluidraum zwischen den Seitenwänden des Filterelements verbindet, kann durch wenigstens eine grundsätzlich in Längsrichtung verlaufende Trennwand unterteilt sein. Hierdurch wird die Stabilität der Kopfstruktur erhöht und somit eine hohe Haltbarkeit gewährleistet.

Die Trennwand kann dabei zwei gegenüberliegende breite Seitenwände verbinden. Der Reinfluidraum zwischen den Seitenwänden kann einen sich von der ersten Stirnwand am Fußende zu der zweiten Stirnwand am Kopfende hin vergrößernden Querschnitt aufweisen.

Der Reinfluidraum und der oder die Hohlräume der Kopfstruktur können einen Auslauftrichter für das Reinfluid bilden, dessen Trichterquerschnitt (Trichteröffnung) mit zunehmendem Abstand von dem Fußende des Filterelements größer wird.

Das Filterelement kann einstückig ausgebildet sein, insbesondere kann die Kopfstruktur einstückig mit dem Filterkörper hergestellt sein. Hierdurch lässt sich das Filterelement vollautomatisiert herstellen, wodurch die Herstellung von großen Stückzahlen möglich ist. Einstückig bedeutet, dass das Filterelement (einschließlich Filterkörper, Kopfstruktur und Fußstruktur) als ein einziges Stück hergestellt ist. Beispielsweise kann das Filterelement einschließlich Filterkörper und Kopfstruktur in einem Stück gesintert oder auf sonstige Weise geformt sein. Diese Herstellungsweise ist einfacher als die bisher angewandte, bei der mehrere jeweils für sich gesinterte oder geformte Komponenten zusammengefügt werden mussten oder die Kopfstruktur in einem separaten Arbeitsschritt an den Filterkörper angespritzt oder angeklebt werden musste und zusätzlich noch Verstärkungsteile aus Metall angebracht werden mussten. Demgegenüber existieren für das erfindungsgemäße Filterelement keine Zwischen- oder Vorkomponenten, die dann zusammengefügt werden müssen. Außerdem sind mechanische Nachbearbeitungsschritte weitgehend entbehrlich.

Beispielsweise kann der Filterkörper als Sinterstruktur aus einem gesinterten partikelförmigen Material hergestellt sein und die Kopfstruktur kann einstückig mit dem Filterkörper zusammengesintert sein. Der Filterkörper und die Kopfstruktur können aus zusammengesinterten Kunststoffteilchen aufgebaut sein, insbesondere aus zusammengesinterten Polyethylen-Teilchen oder aus zusammengesinterten Polyphenylensulfid-Teilchen.

Der Filterkörper und die Kopfstruktur können durch Infrarot-Sintern hergestellt sein. Die zum Infrarot-Sintern erforderliche Wärmeenergie kann dabei mittels Gas bereitgestellt werden oder mittels Elektrizität. Infrarot-Sintern, vor allem bei Bereitstellung von Wärmeenergie mittels Elektrizität, erlaubt es insbesondere, das Sintern in verschiedenen Bereichen des Filterelements mit unterschiedlichen Temperaturen bzw. Energiemengen durchzuführen. Damit kann man in bestimmten Bereichen gezielt gewünschte mechanische Eigenschaften, etwa hinsichtlich Porosität und mechanischer Festigkeit, erreichen. Dies erlaubt das Erzeugen von verschiedenen Eigenschaften für den Filterkörper (Seitenwände-Porosität) und die Kopfstruktur (Festigkeit, strömungsgünstiger Aufbau).

Das Filterelement kann ferner durch ein additives Fertigungsverfahren hergestellt sein.

Die Filterelementhalterung kann wenigstens eine Gegen-Anlagefläche aufweisen, die mit der quer zur Längsrichtung verlaufenden Dichtung an der Seitenwand der Kopfstruktur des Filterelements zusammenwirkt, um das Filterelement gegenüber der Filterelementhalterung abzudichten.

Die Filterelementhalterung kann eine grundsätzlich in Längsrichtung verlaufende Seitenwand aufweisen und die Gegen-Anlagefläche kann wenigstens teilweise umlaufend, insbesondere ganz umlaufend, an dieser grundsätzlich in Längsrichtung verlaufenden Seitenwand ausgebildet sein.

Insbesondere können sowohl das Filterelement als auch die Filterelementhalterung je eine Seitenwand aufweisen, die einander zugeordnet sind, so dass im eingebauten Zustand des Filterelements eine Dichtung zwischen den beiden Seitenwänden ausgebildet ist. Alle vorangehenden Ausführungen hinsichtlich möglicher Ausgestaltung der Seitenwand der Kopfstruktur gelten sinngemäß auch für die Seitenwand der Filterelementhalterung, wobei es sich versteht, dass die beiden Seitenwände eine zueinander komplementäre Konfiguration aufweisen oder jede der Seitenwände eine dem Dichtungselement entsprechende Konfiguration aufweist.

Die Trägerplatte der Filterelementhalterung kann als ein gestanztes und/oder tiefgezogenes Blech ausgebildet sein. Ein solches Blech ist schnell herstellbar und lässt sich einfach tauschen.

Die Filterelementhalterung kann mit einer Mehrzahl von Filterelementaufnahmen versehen sein, in welche jeweils ein eigenes Filterelement einsetzbar ist, insbesondere derart, dass das Filterelement mit seiner Kopfstruktur in der Filterelementaufnahme gehalten ist.

Die Filterelementaufnahme kann eine Dichtungsstruktur aufweisen, die mit der in der Kopfstruktur des Filterelements ausgebildeten Anlagefläche zusammenwirkt.

Die Filterelementaufnahme kann als eine Öffnung in der Trägerplatte ausgebildet sein, wobei die Öffnung von einem von der Trägerplatte abstehenden und wenigstens teilweise um die Öffnung umlaufenden Kragen umgeben ist. Der Kragen kann eine Kragen-Anlagefläche aufweisen, die dazu ausgebildet ist, mit der an der Kopfstruktur des Filterelements ausgebildeten Dichtung zur Abdichtung eines Reinfluidraums von einem Rohfluidraum zusammenzuwirken.

Der Kragen kann sich annähernd in Längsrichtung, insbesondere parallel zur Längsrichtung von der Trägerplatte weg erstrecken.

Die Kragen-Anlagefläche kann eine Dichtungshaltestruktur aufweisen, die insbesondere als Vertiefung oder Nut ausgebildet sein kann. Die Dichtungshaltestruktur kann über den gesamten Umfang der Kragen-Anlagefläche ausgebildet sein.

Die Filterelementaufnahme kann so ausgebildet sein, dass das Filterelement vom Reinfluidraum her in die Öffnung der Trägerplatte einsetzbar ist (reinfluidseitige Montage), oder dass das Filterelement vom Rohfluidraum her an die Öffnung der Trägerplatte ansetzbar ist (rohfluidseitige Montage).

Die Filtervorrichtung kann ferner ein Dichtungselement aufweisen, welches zwischen dem Filterelement und der Filterelementhalterung angeordnet ist, insbesondere zwischen der an der Kopfstruktur ausgebildeten Seitenfläche des Filterelements und der entsprechenden Gegen-Anlagefläche der Filterelementhalterung.

Die Filterelementhalterung kann bevorzugt in der Filtervorrichtung eine Trennwand zwischen dem Rohfluidraum und dem Reinfluidraum ausbilden, so dass zusammen mit einem oder mehreren erfindungsgemäßen Filterelementen der Rohfluidraum von dem Reinfluidraum abgedichtet ist.

Der Filterkörper und die Kopfstruktur können durch ein Sinterverfahren, insbesondere durch Infrarot-Sintern, hergestellt werden. Hierzu können bevorzugt Kunststoffteilchen verwendet werden, die dann im zusammengesinterten Zustand das Filterelement bilden.

Die Kopfstruktur und der Filterkörper können einstückig hergestellt werden. Daraus ergibt sich eine schnelle Herstellung der Filterelemente, die noch dazu vollautomatisiert ablaufen kann.

Alle vorstehend mit Bezug auf das Filterelement und die Filterelementhalterung erläuterten Vorteile und Ausführungsformen treffen auch für die Filtervorrichtung sowie die Herstellung eines erfindungsgemäßen Filterelements zu und werden zur Vermeidung von Wiederholungen nicht noch einmal erläutert.

Die Erfindung wird im Folgenden anhand der in den beigefügten Figuren gezeigten Ausführungsbeispiele näher beschrieben.
Figur 1 zeigt ein erfindungsgemäßes Filterelement.
Figur 2 zeigt ein erfindungsgemäßes Filterelement für reinfluidseitigen Einbau zusammen mit einer erfindungsgemäßen Filterelementhalterung in einem Zustand, in welchem das Filterelement in die Filterelementhalterung eingesetzt wird.
Figur 3 zeigt ein erfindungsgemäßes Filterelement, das in einer erfindungsgemäßen Filterelementhalterung eingebaut ist.
Figur 4 zeigt eine vergrößerte teilweise Schnittansicht der Figur 3 durch eine Kopfstruktur.
Figur 5 zeigt eine Variante des erfindungsgemäßen Filterelements mit einem Dichtungselement, das im abgerundeten Bereich auf einer Schmalseite des Filterelements eine Aufdickung aufweist.
Figur 6 zeigt in einer Detaildarstellung eine Variante eines erfindungsgemäßen Filterelements für rohfluidseitigen Einbau.
Figur 7 zeigt eine Filtervorrichtung mit einem erfindungsgemäßen Filterelement und einer erfindungsgemäßen Filterelementhalterung.
Figur 8 zeigt einen Verfahrensablauf zur Herstellung des in Figur 1 gezeigten Filterelements.

In allen Figuren bezeichnen gleiche Bezugszeichen jeweils gleiche oder hinsichtlich ihrer Funktion gleichartige Komponenten. Jede dieser Komponenten wird nur in Bezug auf die Ausführungsform ausführlich erläutert, in der das entsprechende Bezugszeichen zum ersten Mal vorkommt. Es versteht sich, dass entsprechende Ausführungen auch für die übrigen Ausführungsformen gelten, in denen das jeweilige Bezugszeichen zu finden ist. Zur Vermeidung von Wiederholungen wird ausdrücklich auf die entsprechende Beschreibung bei der erstmaligen Verwendung des jeweiligen Bezugszeichens verwiesen, soweit nicht ausdrücklich anderes vermerkt ist.

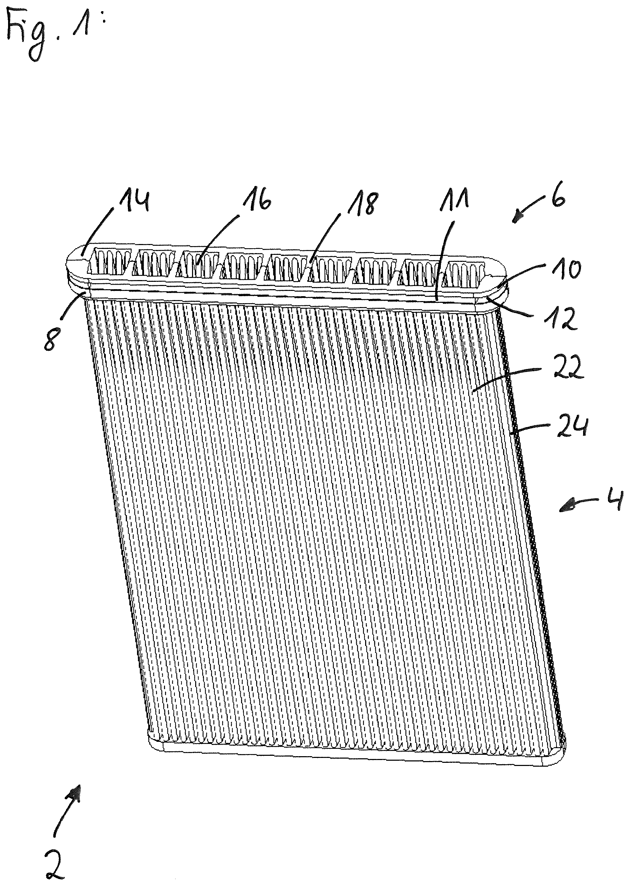

Figur 1 zeigt ein Filterelement 2 mit einem sich zwischen einem Kopfende und einem in Längsrichtung gegenüber liegenden Fußende erstreckenden durchströmungsporösen Filterkörper 4.

Das Filterelement 2 weist zwei breite Seitenwände 22 und zwei, die breiten Seitenwände verbindende schmale Seitenwände 24 auf. In Figur 1 ist jeweils nur eine Seitenwand 22 und eine Seitenwand 24 gezeigt. Alle Seitenwände 22, 24 erstrecken sich im Wesentlichen in Längsrichtung. Die breiten Seitenwände 22 erstrecken sich in Längsrichtung und in Breitenrichtung des Filterelements 2. Die schmalen Seitenwände 24 erstrecken sich orthogonal zu den breiten Seitenwänden 22 in Längsrichtung und Tiefenrichtung des Filterelements 2. Die Seitenwände 22 und 24 bilden zusammen mit einer am Fußende des Filterelements 2 angeordneten, nicht gezeigten Fußstirnwand eine Filtertasche und umgeben einen Filterkörperhohlraum.

Die nach außen gerichteten Seitenflächen der Seitenwände 22 und 24 weisen im eingebauten Zustand zu einem Rohfluidraum. In dem Rohfluidraum befindet sich ein Rohfluid, welches mit Fremdstoffen und Fremdkörpern versetzt ist. Bei Durchtritt des Rohfluids durch das Filterelement 2 werden die Fremdstoffe und Fremdkörper herausgefiltert, so dass ein von Fremdkörpern und Fremdstoffen gereinigtes Reinfluid in den Filterkörperhohlraum gelangt. Aus diesem Filterkörperhohlraum strömt im Betrieb des Filterelements 2 nach Durchtritt durch das Filterelement von Fremdstoffen und Fremdkörpern befreites Reinfluid durch eine Reinfluidaustrittsöffnung 16 ab. Der Filterkörperhohlraum bildet also einen Teil des auf der Reinfluidseite des Filterelements liegenden Reinfluidraums.

Die breiten Seitenwände 22 sind zick-zack-artig oder gewellt ausgebildet, so dass die Filtertasche eine lamellenartige Konfiguration aufweist. Dabei haben Berge und Täler der Seitenwand 22 grundsätzlich einen Verlauf in Längsrichtung des Filterkörpers 4. Die Berge und Täler flachen in der Kopfstruktur 6 zum Kopfende des Filterelements 2 hin ab, so dass die Reinfluidaustrittsöffnung 16 insgesamt einen im Wesentlichen rechteckigen Querschnitt aufweist. Dieser Querschnitt verbessert Ausströmen des Reinfluids aus dem Filterhohlraum des Filterelements 2. Alternativ zu der gezeigten lamellenartigen Konfiguration können die Seitenwände 22 auch als eine ebene Platte ausgebildet sein. In einer nicht gezeigten Form kann die Filtertasche auch nur durch drei Seitenwände oder durch mehr als vier Seitenwände ausgebildet sein. Es ist ebenfalls möglich, dass die Seitenwände 22, 24 in einem Winkel zueinander angeordnet sind, und sich ein Querschnitt des von den Seitenwänden 22, 24 umgebenen Filterhohlraums zur Reinfluidaustrittsöffnung 16 hin vergrößert. Die Filtertasche nimmt dann eine leicht trichterförmige oder pyramidenförmige Gestalt an. Daneben ist es auch möglich die Filtertasche mit einem abgerundeten oder sogar ovalen oder runden Querschnitt auszubilden, wobei die Filtertasche eine röhrenförmige kegelstumpfförmige oder kegelige Gestalt annimmt. Die Seitenwände 22, 24 können sich sogar am Fußende des Filterelements berühren und somit die Fußstirnwand überflüssig machen.

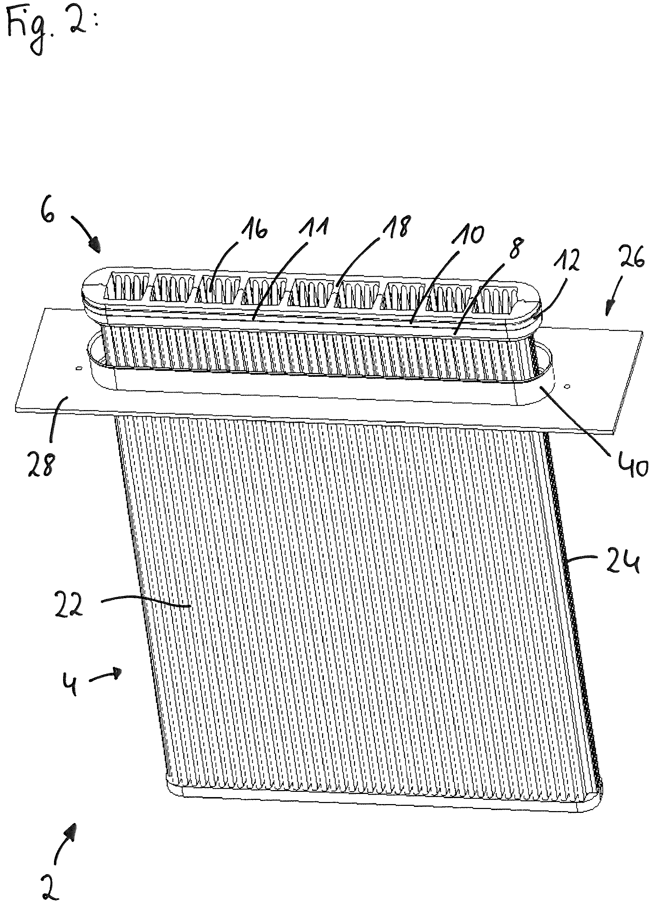

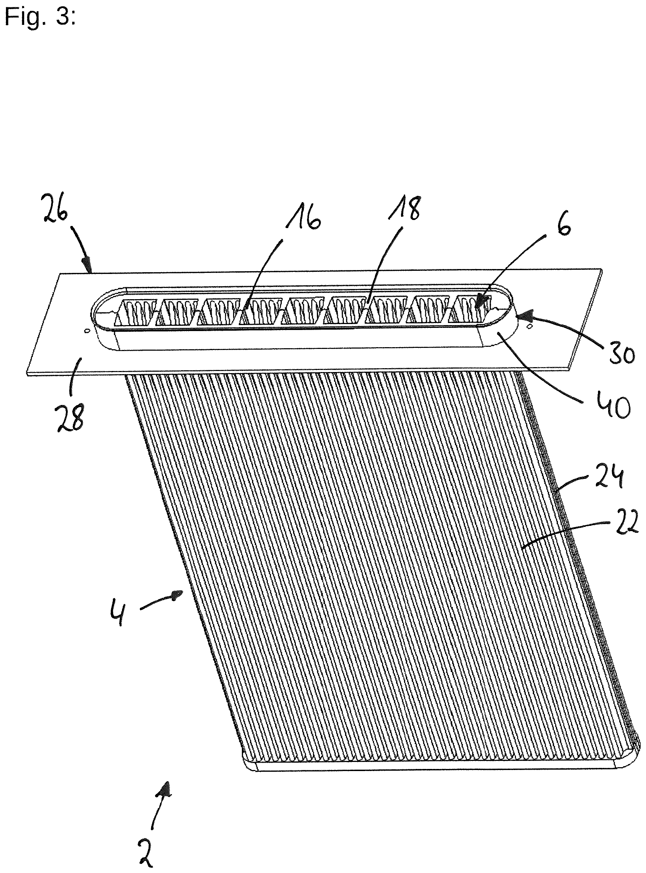

Am Kopfende des Filterelements 2 ist eine Kopfstruktur 6 ausgebildet. Die Kopfstruktur 6 umfasst eine in Längsrichtung verlaufende Seitenwand 8, die um die Reinfluidaustrittsöffnung 16 umlaufend ausgebildet ist. Die Seitenwand 8 umfasst zwei längere einander gegenüber liegende Abschnitte, die in Breitenrichtung des Filterelements 2 verlaufen, und zwei kürzere einander gegenüber liegende Abschnitte, die in Tiefenrichtung des Filterelements 2 verlaufen und die die beiden längeren Abschnitte an je einem Ende des Filterelements 2 miteinander verbinden. Diese kürzeren Abschnitte sind an ihren äußeren Seite abgerundet ausgebildet. An der Seitenwand 8 ist auf der Außenseite eine Dichtung 10 angeordnet, die dazu ausgebildet ist, das Filterelement 2 gegenüber einer in Fig. 1 nicht gezeigten Filterelementhalterung (siehe Figur 2 und 3) abzudichten. Die Dichtung 10 kann eine in der Seitenwand 8 ausgebildete Vertiefung 11 und ein in dieser Vertiefung 11 angeordnetes Dichtungselement 12 aufweisen Das Dichtungselement 12 kann als eine separate Dichtung in Form eines O-Rings, eines Delta-Rings, eines X-Rings, eines T-Rings, einer angeschäumten Dichtung oder einer Faserdichtung ausgebildet sein. Die Vertiefung 11 hat in der gezeigten Ausführungsform die Konfiguration einer in der Seitenwand 8 ausgebildeten Nut, die orthogonal zur Längsrichtung um die gesamte Seitenwand 8 umlaufend und damit die Reinfluidaustrittsöffnung 16 vollständig umgebend verläuft. Die Dichtung 10 erstreckt sich also über einen die Reinfluidaustrittsöffnung 16 umgebenden Umfang der Kopfstruktur 6 entlang der Seitenwand 8. Es ist auch möglich, an der Außenseite der Seitenwand 8 eine andere Dichtungsstruktur auszubilden, mit der das Dichtungselement 12 zusammenwirkt (z.B. ein Wulst), oder sogar, dass das Dichtungselement 12 mit einer nicht weiter strukturierten Außenseite der Seitenwand 8 zusammenwirkt.

In der in Figur 1 gezeigten Ausführungsform ist die Dichtung 10 durch ein Dichtungselement 12 ausgebildet, welches mit der Filterelementhalterung zusammenwirkt. Es sind auch Ausführungsformen denkbar, die ohne Dichtungselement 12 auskommen. Beispielsweise kann die Dichtung 10 eine Anlagefläche aufweisen, die beispielsweise an einer in der Seitenwand 8 ausgebildeten Nut oder an einem von der Seitenwand 8 vorstehenden Wulst oder Materialfortsatz ausgebildet sein kann. In solchen Ausführungsformen wird die Filterelementhalterung, in die das Filterelement 2 eingesetzt wird, mit einer entsprechend komplementär strukturierten Gegen-Anlagefläche versehen sein, so dass sich im eingesetzten Zustand des Filterelements eine Art Labyrinthdichtung ergibt. In weiteren alternativen Ausgestaltungen kann die Seitenwand 8 in einem Bereich eine Materialstruktur aufweisen, die bei Anlage an der Filterelementhalterung eine dichtende Wirkung zwischen der Seitenwand 8 und der Filterelementhalterung ermöglicht. Dies kann durch eine andere Bearbeitung der Seitenwand 8 in dem zur Dichtung vorgesehen Bereich als im übrigen Teil der Seitenwand 8 bewirkt werden, wie zum Beispiel eine rauere Oberfläche als die übrige Seitenwand 8.

Die Dichtung 10 ist in einem Bereich der Seitenwand 8 ausgebildet, der sich in der Nähe des Kopfendes des Filterelements 2 befindet. Eine andere Position der Dichtung 10 an der Seitenwand 8 ist ebenfalls möglich. Die Kopfstruktur 6 kann ferner mehrere Dichtungen 10, die in Längsrichtung hintereinander angeordnet sind, aufweisen, um mehrere Fluidbarrieren auszubilden. Hierdurch kann eine größere Sicherheit bei der Trennung eines Reinfluidraums von einem Rohfluidraum erreicht werden.

Die Kopfstruktur 6 umfasst zudem eine kopfseitige Stirnwand 14, die am Kopfende des Filterelements 2 angeordnet ist und in der die Reinfluidaustrittsöffnung 16 ausgebildet ist. Die Seitenwand 8 der Kopfstruktur 6 umgibt die Reinfluidaustrittsöffnung 16 als umlaufende äußere Begrenzung. Die beiden einander gegenüber liegenden längeren Abschnitte der Seitenwand 8 sind neben den beiden kürzeren Abschnitten der Seitenwand 8 durch insgesamt sieben Stege 18 miteinander verbunden, so dass die Reinfluidaustrittsöffnung 16 in acht Teil-Reinfluidaustrittsöffnungen unterteilt ist. Es versteht sich, dass auch eine geringere oder größere Anzahl an Teil-Reinfluidaustrittsöffnungen möglich ist. Es ist sogar möglich, dass gar keine Stege 18 vorhanden sind, so dass die Kopfstruktur 6 eine von der Seitenwand 8 umgebene zusammenhängende Reinfluidaustrittsöffnung 16 aufweist. Die zwei schmaleren Abschnitte der Seitenwand 8 verlaufen in Tiefenrichtung und begrenzen die Kopfstruktur 6 in Breitenrichtung. In der in Figur 1 gezeigten Ausführungsform sind die schmaleren Abschnitte der Seitenwand 8 auf der Außenseite abgerundet ausgebildet, so dass die Außenseite konvex ausgebildet ist. Die Seitenwand 8 weist also im Bereich der schmaleren Abschnitte eine sich nach außen wölbende Außenfläche auf. Alternativ könnten die schmaleren Abschnitte der Seitenwand 8 auf ihrer Außenseite auch geradlinig oder sogar konkav ausgebildet sein. Die konvex abgerundete Ausbildung der schmalen Abschnitte der Seitenwand 8 erlaubt eine Reduzierung von Spannungen in der Kopfstruktur 6, insbesondere in Folge von Temperaturschwankungen, und erhöht damit die Haltbarkeit des Filterelements 2. Dies wirkt sich vor allem aus, wenn das Filterelement höheren Betriebstemperaturen ausgesetzt ist. Zudem erleichtert die konvex abgerundete Form der schmalen Abschnitte der Seitenwand 8 den Einbau und Ausbau des Filterelements 2.

Die Kopfstruktur 6 ist dazu ausgebildet, das Filterelement 2 in eine in den Figuren 2 bis 4 gezeigten Filterelementhalterung 26 einzusetzen und dort zum Betrieb in einer Filtervorrichtung zu halten. Figur 2 zeigt das Filterelement 2 in einer Konfiguration für reinfluidseitigen Einbau, bei dem das Filterelement 2 vom Reinfluidraum her in die Filterelementhalterung 26 eingesetzt wird. Figur 2 zeigt das Filterelement 2 in einer Position während es Einbaus, bei der das Filterelement 2 noch nicht in einer Endposition angelangt ist, sondern sich in einer Zwischenposition auf dem Weg zu seiner Endposition befindet. Figur 3 zeigt das Filterelement 2 in seiner Endposition in der Filterelementhalterung 26.

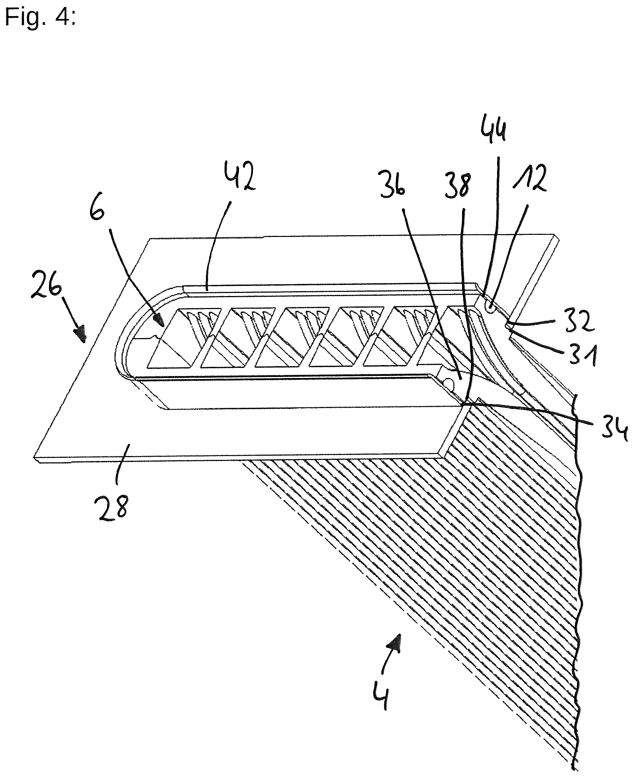

Die Filterelementhalterung 26 weist eine Trägerplatte 28 auf, in der wenigstens eine Filterelementaufnahme 30 ausgebildet ist. Die Trägerplatte 28 kann beispielsweise als ein gestanztes bzw. tiefgezogenes Blech ausgebildet sein, wobei die Filterelementaufnahme 30 eine aus dem Blech ausgestanzte Öffnung 31 und einen an den Rand der Öffnung 31 angesetzten Kragen 40 aufweist. Wie in der Schnittansicht von Figur 4 zu sehen ist, kann die Seitenwand 8 der Kopfstruktur 6 wenigstens einen nach außen ragenden Vorsprung 36 bilden, an dem eine zum Fußende des Filterelements 2 weisende Stirnfläche 38 ausgebildet ist. Alternativ kann ein solcher Vorsprung an der Kopfstruktur 6 im Bereich der Seitenwand 8 nach außen vorstehen. Beim Einsetzen des Filterelements 2 in die Filterelementhalterung 26 kommt die an der Kopfstruktur 6 ausgebildete Stirnfläche 38 in der Endposition mit einer Gegen-Anlagefläche 34 der Filterelementhalterung 26 in Anlage verhindert eine weitere Verlagerung des Filterelements 2 gegenüber der Filterelementhalterung 26 in Einsteckrichtung.

Das Filterelement 2 ist in seiner in Figur 3 dargestellten Einbauposition mit seiner Kopfstruktur 6 in die Filterelementaufnahme 30 eingesetzt und dort gehalten. Zum Einbau wird der Filterkörper 4 des Filterelements 2 mit seinem Fußende voran in Einsteckrichtung von der Reinfluidseite durch die Öffnung 31 der Filterelementaufnahme 30 geführt, bis der an der Kopfstruktur 6 ausgebildete Vorsprung 36, der eine Haltestruktur bildet, mit der zum Fußende des Filterelements 2 weisenden Stirnfläche 38 an einer Gegen-Anlagefläche 34 des an der Filterelementaufnahme 30 ausgebildeten Vorsprungs 32, anliegt und somit eine weitere Bewegung des Filterelements 2 in Einsteckrichtung blockiert.

Im eingebauten Zustand ragt der Filterkörper 4 in den Rohfluidraum einer nicht gezeigten Filtervorrichtung hinein und die Kopfstruktur 6 ist zum Teil im Reinfluidraum angeordnet. Wie weiter unten noch näher erläutert wird, dichtet die Kopfstruktur 6 dabei mittels Anlage des Dichtungselements 12 an dem Kragen 40 den Reinfluidraum gegenüber dem Rohfluidraum ab und sorgt außerdem durch Anlage der Stirnfläche 38 an der Gegen-Anlagefläche 34 für eine Lagerung des Filterelements 2 an der Trägerplatte 28.

Der die Öffnung 31 umgebende Kragen 40 der Filterelementaufnahme 30 erstreckt sich in Längsrichtung annähernd orthogonal von der Trägerplatte 28 weg. Ein von der Trägerplatte 28 weg weisendes Ende 42 des Kragens 40 ist radial nach außen gebogen und bildet so eine Einführhilfe, um beim Einsetzen des Filterelements 2 das Einführen der Kopfstruktur 6 in einen durch den Kragen 40 ausgebildeten Aufnahmeraum 41 zu erleichtern. Der Kragen ist vorzugsweise etwas zurückgesetzt von dem Rand der Öffnung 31 angeordnet und passgenau zu dem Vorsprung 36 an der Kopfstruktur 6. Auf diese Weise bildet der zum Rand der Öffnung 31 überstehende Teil der Trägerplatte 28 einen Vorsprung 32 mit einer Gegen-Anlagefläche 34, an der die am Vorsprung 36 der Kopfstruktur 6 des Filterelements 2 ausgebildete Stirnfläche 38 in Anlage kommt.

Der Kragen 40 hat eine Innenfläche 42 mit einer Kragenanlagefläche 44, die der Dichtung 10 der Kopfstruktur 6 im eingebauten Zustand des Filterelements 2 gegenüberliegt. Die Kragenanlagefläche 44 ist so ausgebildet, dass sie zusammen mit der Dichtung 10, in dem gezeigten Beispiel mit dem Dichtungselement 12, den Rohfluidraum gegenüber dem Reinfluidraum abdichtet. Die Kragenanlagefläche 44 kann eine Vertiefung oder eine Nut aufweisen, die so ausgebildet ist, dass sich ein guter Sitz der Dichtung 10 im Einbauzustand ergibt. Im Falle der Verwendung eines Dichtungselements 12 kann die Vertiefung oder Nut insbesondere zur Aufnahme des Dichtungselements 12 ausgebildet sein. Die Kragenanlagefläche 44 ist vorzugsweise komplett umlaufend um die Innenfläche 42 des Kragens 40 angeordnet.

Bei dem erfindungsgemäßen Aufbau von Filterelement und Filterelementhalterung sind neben Dichtungsstrukturen, deren Funktion es ist, den Rohfluidraum von dem Reinfluidraum zu trennen, insbesondere die Seitenwand 8, die Kragenanlagefläche 42 und gegebenenfalls das Dichtungselement 12, noch weitere Strukturen vorgesehen, die das Filterelement 2 in der Filterelementhalterung 26 halten, insbesondere die Vorsprünge 32 und 36. Es hat sich gezeigt, dass dieser Aufbau, bei dem die Dichtungsstrukturen keine zum Halten bzw. sicheren Lagern des Filterelements 2 in der Filterelementhalterung 26 erforderlichen Kräfte aufnehmen müssen, eine wesentlich einfachere und besser automatisierbare Herstellung von Filterelementen 2 und der Filterelementhaltungen 26 zulässt.

Im Ausführungsbeispiel ist das Filterelement 2 einstückig ausgebildet. Das bedeutet, dass der Filterkörper 4 und die Kopfstruktur 6 aus dem gleichen Material hergestellt sind. Das Material kann ein gesintertes partikelförmiges Material sein, insbesondere zusammengesinterte Kunststoffteilchen. Dennoch können Filterkörper 4 und Kopfstruktur 6 unterschiedliche Konfigurationen aufweisen bzw. können strukturelle Unterschiede zwischen Filterkörper 4 und Kopfstruktur 6 bestehen. Insbesondere wird für den Filterkörper 4 eine ausreichend poröse Struktur angestrebt und ein Passieren von zu filterndem Fluid bei akzeptablem Druckverlust zu ermöglichen. Hingegen wird für die Kopfstruktur 6 vor allem ausreichende Steifigkeit angestrebt, um das Filterelement 2 sicher in der Filterelementhalterung 26 aufzunehmen und zu lagern. Das Filterelement 2 kann dabei insbesondere durch Infrarot-Sintern hergestellt sein. Dies ermöglicht eine einfache Steuerung der Porosität des Filterelements in Bereichen, die den Filterkörper 4 und die Kopfstruktur 6 bilden, wobei Bereiche für den Filterkörper 4 eine andere Porosität aufweisen als Bereiche, in denen die Kopfstruktur 6 ausgebildet ist. Der Filterkörper 4 weist insbesondere eine höhere Porosität auf als die Kopfstruktur 6. Die Kopfstruktur ist demgegenüber steifer ausgebildet, also stärker versintert als der Filterkörper.

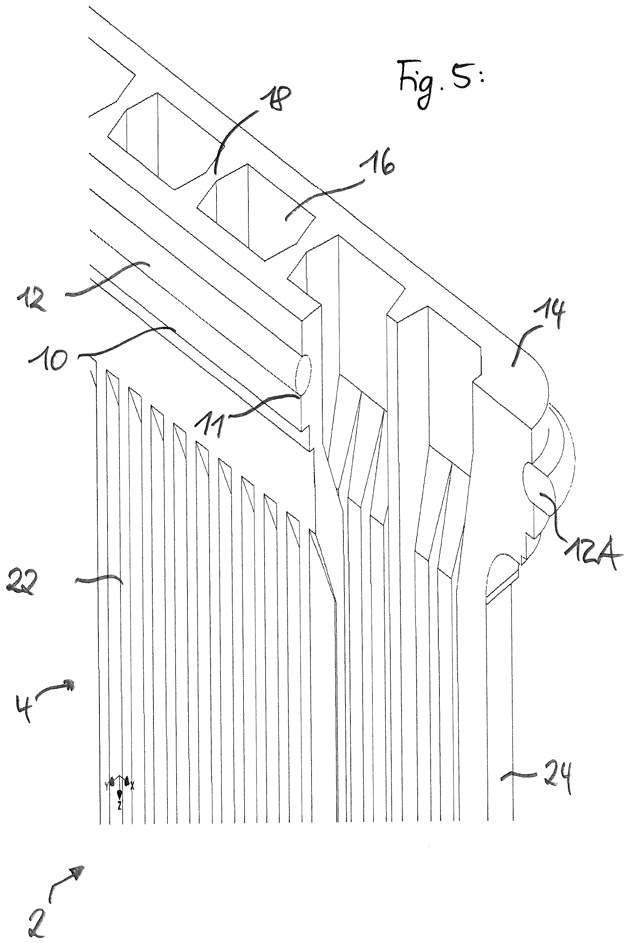

Die Figur 5 zeigt eine Variante des erfindungsgemäßen Filterelements 2 mit einem Dichtungselement 12, das in den beiden abgerundeten Bereichen auf den Schmalseiten des Filterelements 2 eine Aufdickung 12A aufweist. Es sei nochmals darauf hingewiesen, das in Figur 5 dieselben Bezugszeichen verwendet werden wie in den Figuren 1 bis 4, soweit jeweils gleiche oder hinsichtlich ihrer Funktion gleichartige Komponenten bezeichnet sind. Im Folgenden werden nur die Unterschiede der Ausführungsform gemäß Figur 5 näher erläutert und zur Erläuterung der weiteren Komponenten auf die Beschreibung der Figuren 1 bis 4 verwiesen, die für die Ausführungsform gemäß Figur 5 in gleicher Weise gilt.

Auch bei der Ausführungsform gemäß Figur 5 umfasst die Kopfstruktur 6 eine in Längsrichtung verlaufende Seitenwand 8, die um die Reinfluidaustrittsöffnung 16 umlaufend ausgebildet ist. Die Seitenwand 8 umfasst zwei längere einander gegenüber liegende Abschnitte, die in Breitenrichtung des Filterelements 2 verlaufen, und zwei kürzere einander gegenüber liegende Abschnitte, die in Tiefenrichtung des Filterelements 2 verlaufen und die die beiden längeren Abschnitte an je einem Ende des Filterelements 2 miteinander verbinden. Diese kürzeren Abschnitte sind an ihren äußeren Seite abgerundet ausgebildet. An der Seitenwand 8 ist auf der Außenseite eine um die Reinfluidaustrittsöffnung 16 umlaufende Nut 11 ausgebildet, in der ein als Dichtungsring ausgebildetes Dichtungselement 12 aufgenommen ist. Das Dichtungselement 12 hat in dem gezeigten Ausführungsbeispiel einen im Wesentlichen runden Querschnitt.

Es hat sich herausgestellt, dass bei Filterelementen 2, die im Betrieb höheren Temperaturen von 50 °C oder mehr ausgesetzt sind, die Filterelemente 2 eine merkliche Wärmeausdehnung zeigen können. Diese Wärmedehnung ist besonders ausgeprägt in Breitenrichtung des Filterelements 2, als in Richtung parallel zu den längeren Seitenflächen 22 des Filterelements 2. Aus diesem Grund ist bei der Ausführungsform gemäß Figur 5 das Dichtungselement 12 in den kürzeren abgerundeten Abschnitten der Seitenwand 8, die in Tiefenrichtung verlaufen und die beiden längeren Abschnitte verbinden, mit einem größeren Querschnitt ausgebildet als in den anderen Abschnitten des Dichtungselements 12. Das Dichtungselement 12 weist also in diesen Abschnitten eine Aufdickung auf, die in Figur 5 mit dem Bezugszeichen 12A veranschaulicht ist. Man sieht in Figur 5, dass das Dichtungselement 12 in den Bereichen der Aufdickung 12A einen eher ellipsenförmigen Querschnitt annimmt, wobei die größte Ausdehnung der Aufdickung 12A in Breitenrichtung des Filterelements 2 zeigt. Es sei aber betont, dass die gezeigte Ausgestaltung des Dichtungselements 12 mit einer Aufdickung 12A auch bei Verwendung von Dichtungselementen mit anderer Querschnittsform (z.B. rechteckig oder trapezförmig) möglich und sinnvoll ist, um starke Wärmeausdehnung des Filterelements 2 in einer bestimmten Richtung auszugleichen.

Aufgrund des größeren Querschnitts des Dichtungselements 12 im Bereich der Aufdickungen 12A kann das Dichtungselement im Bereich der Aufdickungen 12A in Richtung seines größten Querschnitts in stärkerem Maß komprimiert werden als in den übrigen Bereichen des Dichtungselements 12. Es wird gewissermaßen ein Stauchungsweg verlängert, um den das Dichtungselement 12 komprimiert werden kann. Die Aufdickungen 12A sind so ausgebildet, dass die Richtung des größten Querschnitts im Bereich der Aufdickungen 12A in Breitenrichtung des Filterelements 2 zeigt, also in die Richtung, in der die größte Wärmeausdehnung des Filterelements 2 im Betrieb auftritt. Auf diese Weise stellen die aufgedickten Bereiche 12A des Dichtungselements 12 ein zusätzliches Maß an elastischem oder komprimierbarem Material bereit, welches sich bei der vornehmlich in Breitenrichtung auftretenden Wärmedehnung des Filterelements 2 komprimieren lässt. Auf diese Weise gleicht das Dichtungselement 12 die zusätzliche Wärmedehnung des Filterelements 2 in Breitenrichtung aus.

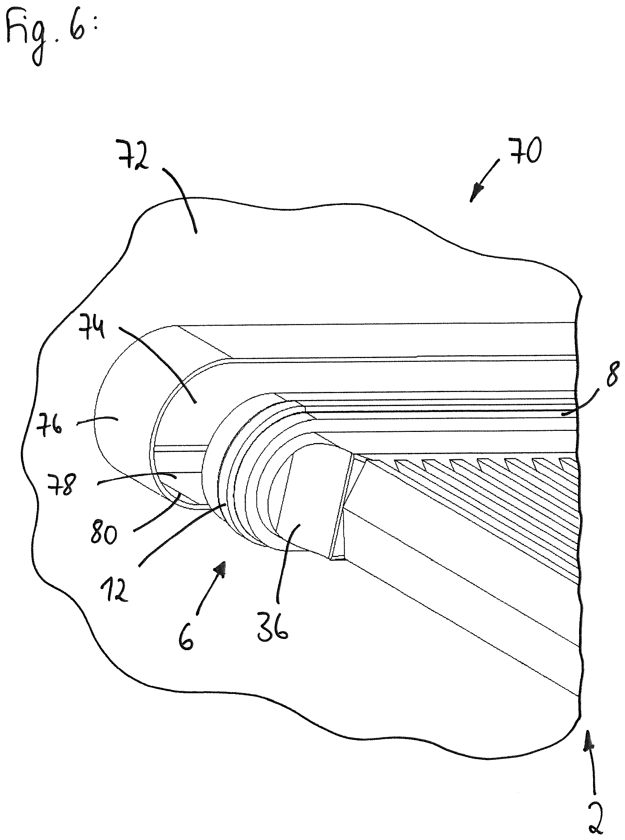

Figur 6 zeigt in einer Detailansicht eine Variante des erfindungsgemäßen Filterelements 2 für Einbau in eine Filterelementhalterung 70 von der Rohfluidseite her. Auch in Figur 6 werden dieselben Bezugszeichen verwendet wie in den Figuren 1 bis 5, soweit jeweils gleiche oder hinsichtlich ihrer Funktion gleichartige Komponenten bezeichnet sind. Im Folgenden werden nur die Unterschiede der Ausführungsform gemäß Figur 6 näher erläutert und zur Erläuterung der weiteren Komponenten auf die Beschreibung der Figuren 1 bis 5 verwiesen, die für die Ausführungsform gemäß Figur 6 in gleicher Weise gilt.

Die Filterelementhalterung 70 umfasst eine Trägerplatte 72 mit einer Öffnung 74. Um die Öffnung 74 herum ist ein Kragen 76 angeordnet, der sich in Längsrichtung von der Trägerplatte 72 weg erstreckt und der gemeinsam mit der Trägerplatte 72 eine Filterelementaufnahme 78 umgibt. Im eingebauten Zustand ragt der Kragen 76 in den Rohfluidraum einer Filtervorrichtung hinein. Die Filterelementhalterung 70 und der Kragen 76 sind ähnlich zu der Filterelementhalterung 26 und dem Kragen 40 ausgebildet. Beim Einbau des Filterelements 2 wird das Filterelement 2 mit seiner Kopfstruktur 6 von der Rohfluidseite her in den zwischen Kragen 76 und Trägerplatte 72 gebildeten Raum, der die Filterelementaufnahme 78 bildet, eingesteckt, so dass die Seitenwand 8 der Kopfstruktur 6 des Filterelements 2 einer an der Innenseite des Kragens 76 ausgebildeten Kragenanlagefläche 80 gegenüberliegt und sich die Kopfstruktur 6 hauptsächlich in dem Rohfluidraum befindet Zwischen der Seitenwand 8 und der Kragenanlagefläche 80 befindet sich das Dichtelement 12 in dichtender Anlage an der Seitenwand 8 und der Kragenanlagefläche 80. Im eingebauten Zustand ist das Filterelement 2 mit einem nicht gezeigten Befestigungsmittel an der Trägerplatte 72 befestigt, beispielsweise durch eine Klammer oder ein Blech, welche(s) von der Rohfluidseite her am Kragen 76 oder an der Trägerplatte 72 angebracht wird und den an der Kopfstruktur 6 des Filterelements 2 ausgebildeten Vorsprung 36 übergreift, so dass die Kopfstruktur 6 zwischen der Trägerplatte 72 und der Klammer bzw. dem Blech eingeklemmt ist. Alternativ kann die Kopfstruktur auch mit Schrauben oder ähnlichem befestigt werden, die von der Reinfluidseite her durch die Trägerplatte 72 durchführen und in ein Gewinde in der Kopfstruktur 6 eingedreht werden. Eine andere Möglichkeit ist, dass eine oder mehrere Schrauben oder Bolzen durch den Kragen 76 hindurch in die Kopfstruktur 6 eingeschraubt werden.

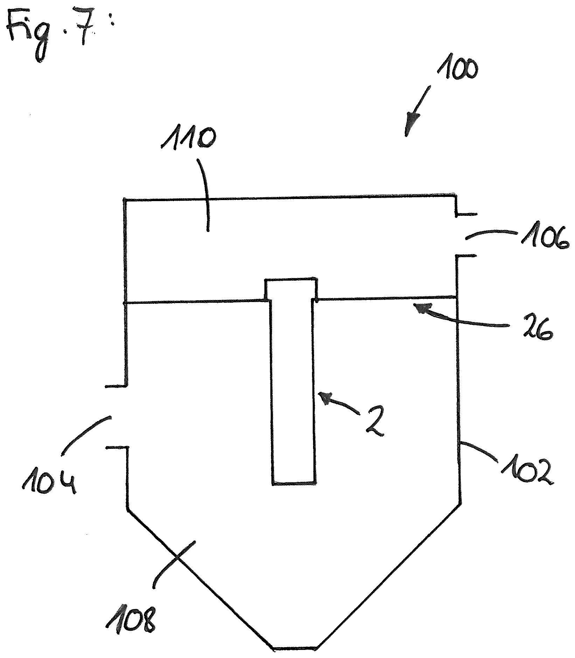

Figur 7 zeigt schematisch eine Filtervorrichtung 100, die ein Gehäuse 102 mit einem Rohfluideinlass 104 und einen Reinfluidauslass 106 aufweist. In dem Gehäuse 102 ist die Filterelementhalterung 26 mit dem eingesetzten Filterelement 2 so angeordnet, dass die Filterelementhalterung 26 und das Filterelement 2 einen Rohfluidraum 108, in den der Rohfluideinlass 104 mündet, von einem Reinfluidraum 110, der mit dem Reinfluidauslass 106 verbunden ist, trennen. In der Filtervorrichtung 100 ist die Filterelementhalterung 26 horizontal angeordnet und das Filterelement 2 ragt orthogonal dazu in den Rohfluidraum 108 hinein. In Figur 7 ist ein reinfluidseitiger Einbau des Filterelements 2 in die Filterelementhalterung 26 gezeigt. Das bedeutet, dass das Filterelement 2 vom Reinfluidraum 110 in die Filterelementhalterung 26 eingebaut wird und durch die Filterelementhalterung 26 in den Rohfluidraum 108 hineinragt. Für reinfluidseitigen Einbau geeignete Filterelemente 2 sind in den Figuren 1 bis 5 gezeigt. Alternativ zu dem reinfluidseitigen Einbau gemäß Figur 7 kann das Filterelement 2 ebenfalls rohfluidseitig in die Filterelementhalterung 26 eingebaut sein. Dazu wird das Filterelement 2 mit seiner Kopfstruktur vom Rohfluidraum 108 auf die Filterelementhalterung 26 aufgesetzt. Ein für reinfluidseitigen Einbau geeignetes Filterelement 2 ist in den Figur 6 gezeigt.

Alternativ zu der horizontalen Ausrichtung der Filterelementhalterung 26 ist es auch möglich, die Filterelementhalterung vertikal oder in einem anderen Winkel relativ zu dem Gehäuse 102 anzuordnen. Das bedeutet, dass auch das Filterelement 2 in der alternativen Ausführung eine andere Ausrichtung relativ zu dem Gehäuse 102 haben kann.

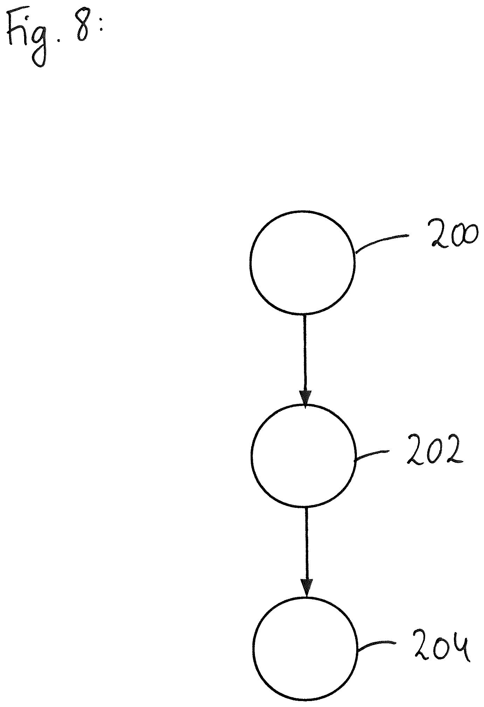

Figur 8 zeigt einen Verfahrensablauf zum Herstellen des Filterelements 2, wobei die Herstellung des Filterelements 2 automatisiert erfolgt. Das Verfahren umfasst das Herstellen des durchströmungsporösen und eigenstabilen Filterkörpers 4 und das Ausbilden der Kopfstruktur 6 an dem Filterkörper 4. Dabei wird die Kopfstruktur 6 mit der wenigstens einen Dichtung 10 versehen, die dazu ausgebildet ist, dass sie mit der Filterelementhalterung 26 der Filtervorrichtung 80 zusammenwirkt, um den Reinfluidraum 110 gegenüber dem Rohfluidraum 88 abzudichten.

In einem ersten Schritt 200 wird vorzugsweise ein partikelförmiges Kunststoffmaterial in eine Sinterform gefüllt. In Schritt 202 wird die Sinterform erhitzt, so dass das partikelförmige Kunststoffmaterial einen durchströmungsporösen und eigenstabilen Filterkörper 4 ausbildet. Die Sinterform wird in einem Bereich in dem die Kopfstruktur 6 des Filterelements 2 an dem Filterkörper 2 oder zusammen mit dem Filterkörper 2 ausgebildet wird, anders bzw. stärker erhitzt, so dass sich im Bereich der Kopfstruktur 6 ein steiferes und nahezu fluidundurchlässiges Materialgefüge ergibt. Ein Übergang zwischen dem Filterkörper 4 und der Kopfstruktur 6 weist eine geringere Porosität als der Filterkörper 4 und eine höhere Porosität als die Kopfstruktur 6 auf. Die Sinterform kann eine Struktur umfassen, die zur Ausbildung der Dichtung 10 dient, oder jedenfalls zur Ausbildung einer zur Dichtung 10 gehörenden Struktur wie einer Vertiefung oder Nut 11 zur Aufnahme eines Dichtungselements 12. Alternativ kann die Dichtung 10 auch in einem auf den Sinterprozess folgenden Schritt ausgebildet werden, der ebenfalls automatisiert ablaufen kann. Zur Erzielung von Zonen mit unterschiedlicher Wärmezufuhr zu Bereichen der Sinterform, in denen das in die Sinterform eingefüllte Kunststoffmaterial den Filterkörper 4 bilden soll, und Bereichen, in denen das in die Sinterform eingefüllte Kunststoffmaterial die Kopfstruktur 6 bilden soll, kann das Sintern insbesondere durch Infrarot-Sintern durchgeführt werden. Auf diese Weise lässt sich besonders einfach die jeweils gewünschte Porosität oder Steifigkeit des Filterelements 2 in verschiedenen Bereichen steuern. Das Verfahren kann so durchgeführt werden, dass der Filterkörper 4 integral oder einstückig mit der Kopfstruktur 6 ausgebildet ist. Aus diesem Grund müssen keine zusätzlichen Befestigungsmittel verwendet werden, um den Filterkörper 4 und die Kopfstruktur 6 zu verbinden. Nachdem das Filterelement 20 in der Sinterform abgekühlt ist, kann es in Schritt 204 aus der Sinterform herausgelöst werden. Dies geschieht vorzugsweise durch Öffnen der Sinterform und Herausheben des Filterelements aus der Sinterform.

## Patentansprüche

1. Filterelement (2) mit einem sich zwischen einem Kopfende und einem in Längsrichtung gegenüber liegenden Fußende erstreckenden durchströmungsporösen Filterkörper (4);
wobei der Filterkörper (4) aus einem gesinterten partikelförmigen Material ausgebildet ist;
wobei am Kopfende des Filterelements (2) eine Kopfstruktur (6) ausgebildet ist, welche wenigstens eine Dichtung (10) aufweist, die dazu ausgebildet ist, das Filterelement (2) gegenüber einer Filterelementhalterung (26) abzudichten,
wobei die Kopfstruktur (6) eine grundsätzlich in Längsrichtung verlaufende Seitenwand (8) aufweist;
**dadurch gekennzeichnet, dass** die Dichtung (10) an der grundsätzlich in Längsrichtung verlaufenden Seitenwand (8) der Kopfstruktur (6) des Filterelements (2) ausgebildet ist;
wobei die Dichtung (10) derart ausgebildet ist, dass die Funktion, das Filterelement sicher in einer Filterelementhalterung (26: 70) zu befestigen und zu lagern, anderen Strukturen der Kopfstruktur (6) zukommt als der Dichtung (10);
und die Kopfstruktur (6) einstückig mit dem Filterkörper zusammengesintert ist.

2. Filterelement (2) nach Anspruch 1, wobei die Dichtung (10) wenigstens teilweise um eine in der Kopfstruktur (6), insbesondere in einer am Kopfende des Filterkörpers (2) angeordneten Stirnwand, ausgebildete Reinfluidaustrittsöffnung (16) umlaufend, insbesondere ganz umlaufend, an der in Längsrichtung verlaufenden Außenseite der Seitenwand (8) der Kopfstruktur (6) ausgebildet ist.

3. Filterelement (2) nach Anspruch 1 oder 2, wobei die Dichtung (10) ein quer zur Längsrichtung verlaufendes Dichtungselement (12) aufweist, um das Filterelement (2) gegenüber der Filterelementhalterung (26) abzudichten.

4. Filterelement (2) nach Anspruch 3, wobei die Seitenwand (8) an ihrer Außenseite eine Vertiefung (11) zur Aufnahme des Dichtungselements (12) aufweist, wobei die Vertiefung (11) insbesondere grundsätzlich orthogonal zur Längsrichtung verläuft und wobei die Seitenwand (8) mehrere Vertiefungen (11) aufweist.

5. Filterelement (2) nach Anspruch 3 oder 4, wobei das Dichtungselement (12) mit der Seitenwand (8), insbesondere mit der Vertiefung (11), zusammenwirkt, um das Filterelement (2) gegenüber der Filterelementhalterung (26) abzudichten und wobei das Dichtungselement (12) insbesondere einen O-Ring, einen Delta-Ring, einen X-Ring, einen T-Ring, eine angeschäumte Dichtung oder eine Faserdichtung umfasst.

6. Filterelement (2) nach einem der vorherigen Ansprüche, wobei das Filterelement (2) wenigstens drei Seitenwände (22, 24), insbesondere wenigstens vier Seitenwände (22, 24), aufweist sowie wenigstens eine Fußstirnwand, die die Seitenwände (22, 24) miteinander am Fußende verbindet, wobei insbesondere das Filterelement (2) zwei breite Seitenwände (22) und zwei schmale Seitenwände (24) aufweist, welche die zwei breiten Seitenwände (22) miteinander verbinden, wobei insbesondere ein Bereich der Seitenwände (22, 24) den Filterkörper ausbildet und zwischen den Seitenwänden (22, 24) ein Reinfluidraum ausgebildet ist, in dem ein aus einem Rohfluid nach Durchtritt durch die Seitenwände gebildetes Reinfluid abströmt.

7. Filterelement (2) nach Anspruch 6, wobei wenigstens eine der zwei breiten Seitenwände (22) zick-zack-artig oder gewellt ausgebildet ist, wobei Berge und Täler der wenigstens einen Seitenwand einen Verlauf grundsätzlich in Längsrichtung des Filterelements (6) haben, wobei insbesondere die Berge und Täler in der Kopfstruktur (6) zum Kopfende hin abflachen, so dass ein in der Kopfstruktur (6) ausgebildeter Reinfluidauslass (169 im Wesentlichen einen rechteckigen Querschnitt für die Reinfluidströmung aufweist.

8. Filterelement (2) nach einem der vorherigen Ansprüche, wobei die Kopfstruktur (6) zum Fixieren des Filterelements (2) an der Filterelementhalterung (26) ausgebildet ist, wobei insbesondere die Kopfstruktur (6) wenigstens einen nach außen ragenden Vorsprung (36) bildet, der dazu ausgebildet ist, mit einer an der Filterelementhalterung (26) ausgebildeten Haltestruktur (32) zusammenzuwirken, um das Filterelement (2) gegenüber Verlagerung in Längsrichtung zu sichern, insbesondere gegenüber Verlagerung in Einsteckrichtung, und/oder wobei die Kopfstruktur (6) im Bereich der Seitenwand (8) wenigstens in einem Abschnitt derselben nach außen vorsteht, so dass die Kopfstruktur (6) einen Vorsprung bildet, der eine zu dem Fußende des Filterkörpers gerichtete Stirnfläche (38) ausbildet, die mit einer an der Filterelementhalterung (26) ausgebildeten Gegen-Stirnfläche (34) zusammenwirkt, um das Filterelement (29 gegenüber Verlagerung in Längsrichtung zu sichern.

9. Filterelement (2) nach einem der vorherigen Ansprüche, wobei der Filterkörper (4) und die Kopfstruktur (6) aus zusammengesinterten Kunststoffteilchen aufgebaut sind, und/oder wobei der Filterkörper (4) und die Kopfstruktur (6) durch Infrarot-Sintern hergestellt sind, und/oder wobei das Filterelement (2) durch ein additives Fertigungsverfahren herstellbar ist.

10. Kombination aus einem Filterelement (2) nach einem der Ansprüche 1 bis 9 und einer Filterelementhalterung (26; 70), in die das Filterelement (2) einsetzbar ist, derart dass das Filterelement (2) im eingesetzten Zustand einen Rohfluidraum von einem Reinfluidraum einer Filtervorrichtung trennt,
wobei die Seitenwand (8) der Kopfstruktur (6) und die Filterelementaufnahme (30; 78) zusammenwirken, um das Filterelement (2) gegenüber der Filterelementhalterung (26; 70) abzudichten, insbesondere in Zusammenwirkung mit einem quer zur Längsrichtung verlaufenden Dichtungselement (10).

11. Kombination nach Anspruch 10, wobei die Filterelementhalterung aufweist:
eine Trägerplatte (28; 72) mit wenigstens einer Filterelementaufnahme (30; 78), in die das Filterelement (2) einsetzbar ist, und zwar derart, dass das Filterelement (2) mit seiner Kopfstruktur (6) in der Filterelementaufnahme (30; 78) sitzt,
wobei die Filterelementhalterung (26; 70) derart ausgebildet ist, dass die Funktion, das Filterelement sicher in der Filterelementhalterung (26; 70) zu befestigen und zu lagern, anderen Strukturen der Kopfstruktur (6) des Filterelements (2) zukommt als der Dichtung (10).

12. Kombination nach Anspruch 10 oder 11, **dadurch gekennzeichnet, dass** die Trägerplatte (28; 72) ein gestanztes und/oder tiefgezogenes Blech aufweist, wobei die Filterelementaufnahme (30) einen Kragen (40; 76) aufweist, der sich in Längsrichtung von der Trägerplatte (28; 72) weg erstreckt, wobei der Kragen (40; 76) eine Kragenanlagefläche (44; 80) aufweist, die dazu ausgebildet ist, mit der Dichtung (10) des Filterelements (2) zur Abdichtung eines Rohfluidraums von einem Reinfluidraum zusammenzuwirken; und/oder
wobei eine Dichtungshaltestruktur, insbesondere eine Vertiefung, an der Kragenanlagefläche (44; 80) ausgebildet ist, die zur Aufnahme der an der Seitenwand (8) der Kopfstruktur (6) vorgesehenen Dichtung (10) ausgebildet ist;
wobei die Dichtungshaltestruktur insbesondere über einen gesamten Umfang der Kragenanlagefläche (44, 80) ausgebildet ist.

13. Filtervorrichtung (100) aufweisend
einen Rohfluidraum (108);
einen Reinfluidraum (110);
wobei die Filtervorrichtung (100) wenigstens eine Kombination aus wenigstens einem Filterelement (2) und einer Filterelementhalterung (26; 70) nach Anspruch 12 aufweist,
wobei das Filterelement (2) in eine in der Filterelementhalterung (26; 70) ausgebildete Filterelementaufnahme (30; 80) eingesetzt ist, und zwar derart dass das Filterelement (2) im eingesetzten Zustand den Rohfluidraum von dem Reinfluidraum trennt.

14. Verfahren zur Herstellung eines Filterelements (2) nach einem der Ansprüchen 1 bis 9, umfassend
Herstellen eines durchströmungsporösen und eigenstabilen Filterkörpers (4) und
Ausbilden einer Kopfstruktur (6) an dem Filterkörper (4), wobei die Kopfstruktur (6) eine grundsätzlich in Längsrichtung verlaufende Seitenwand (8) aufweist;
wobei die Kopfstruktur (6) mit wenigstens einer Dichtung (10) versehen wird, die derart ausgebildet ist, dass sie mit einer Filterelementhalterung (26; 70) einer Filtervorrichtung (100) zusammenwirkt, um einen Reinfluidraum gegenüber einem Rohfluidraum der Filtervorrichtung (100) abzudichten;
**dadurch gekennzeichnet, dass** die Dichtung (10) an der grundsätzlich in Längsrichtung verlaufenden Seitenwand (8) der Kopfstruktur (6) des Filterelements (2) ausgebildet wird und die Kopfstruktur (6) derart ausgebildet wird, dass die Funktion, das Filterelement sicher in einer Filterelementhalterung (26; 70) zu befestigen und zu lagern, anderen Strukturen der Kopfstruktur (6) des Filterelements (2) zukommt als der Dichtung (10);
wobei der Filterkörper (4) und die Kopfstruktur (6) durch ein Sinterverfahren einstückig hergestellt werden und die Herstellung des Filterelements (2) automatisiert erfolgt.

15. Verfahren nach Anspruch 14, wobei die Dichtung (10) ein quer zur Längsrichtung verlaufendes Dichtungselement (12) umfasst, um das Filterelement (2) gegenüber der Filterelementhalterung (26; 70) abzudichten, und/oder wobei die Kopfstruktur (6) mit einer grundsätzlich in Längsrichtung verlaufenden Seitenwand (8) versehen wird und die Dichtung (10) an dieser grundsätzlich in Längsrichtung verlaufenden Seitenwand (8) ausgebildet wird, und/oder wobei die Kopfstruktur (6) derart ausgebildet wird, dass sie mit der Filterelementhalterung (26; 70) der Filtervorrichtung (100) zusammenwirkt, um das Filterelement (2) in der Filterelementhalterung (26; 70) zu fixieren, und/oder wobei der Filterkörper (4) und die Kopfstruktur (6) aus zusammengesinterten Kunststoffteilchen hergestellt werden, und/oder wobei der Filterkörper (4) und die Kopfstruktur (6) durch Infrarot-Sintern hergestellt werden.

## Claims

1. A filter element (2) including a throughflow-porous filter body (4), extending between a head end and a longitudinally opposite foot end;
wherein the filter body (4) is formed from a sintered particulate material;
wherein a head structure (6) is formed at the head end of the filter element (2), said head structure comprising at least one seal (10) configured to seal the filter element (2) with respect to a filter element holder (26),
wherein the head structure (6) comprises a sidewall (8) extending basically in the longitudinal direction;
**characterized in that**
the seal (10) is formed on said basically longitudinally extending sidewall (8) of the head structure (6) of the filter element (2);
wherein the seal (10) is configured such that the function of securely fastening and supporting the filter element in a filter element holder (26: 70) is performed by other structures of the head structure (6) than the seal (10);
and the head structure (6) is sintered in one piece together with the filter body.

2. The filter element (2) according to claim 1, wherein the seal (10) is formed on the longitudinally extending outer side of the sidewall (8) of the head structure (6) so as to extend at least partially circumferentially, in particular completely circumferentially, around a clean fluid outlet opening (16) formed in the head structure (6), in particular in an end wall arranged at the head end of the filter body (2).

3. The filter element (2) according to claim 1 or 2, wherein the seal (10) comprises a sealing element (12) extending transversely to the longitudinal direction to seal the filter element (2) with respect to the filter element holder (26).

4. The filter element (2) according to claim 3, wherein the sidewall (8) has, on its outer surface, a recess (11) for receiving the sealing element (12), wherein the recess (11) extends, in particular, basically orthogonally to the longitudinal direction, and wherein the sidewall (8) comprises a plurality of recesses (11).

5. The filter element (2) according to claim 3 or 4, wherein the sealing element (12) cooperates with the sidewall (8), in particular with the recess (11), to seal the filter element (2) with respect to the filter element holder (26), and wherein the sealing element (12) comprises, in particular, an O-ring, a delta ring, an X-ring, a T-ring, a foamed-on seal, or a fiber seal.

6. The filter element (2) according to any one of the preceding claims, wherein the filter element (2) comprises at least three sidewalls (22, 24), in particular at least four sidewalls (22, 24), as well as at least one foot end wall connecting the sidewalls (22, 24) to one another at the foot end, wherein, in particular, the filter element (2) comprises two wide sidewalls (22) and two narrow sidewalls (24) connecting the two wide sidewalls (22) to one another, wherein, in particular, a region of the sidewalls (22, 24) forms the filter body, and a clean fluid space is formed between the sidewalls (22, 24), in which a clean fluid formed from a raw fluid after passing through the sidewalls flows out.

7. The filter element (2) according to claim 6, wherein at least one of the two wide sidewalls (22) is formed in a zig-zag-like or corrugated manner, wherein peaks and valleys of the at least one sidewall have a course basically extending in the longitudinal direction of the filter element (6), wherein, in particular, the peaks and valleys in the head structure (6) flatten toward the head end so that a clean fluid outlet (169) formed in the head structure (6) has a substantially rectangular cross-section for the clean fluid flow.

8. The filter element (2) according to any one of the preceding claims, wherein the head structure (6) is configured to fix the filter element (2) to the filter element holder (26), wherein, in particular, the head structure (6) forms at least one outwardly projecting protrusion (36) configured to cooperate with a retaining structure (32) formed on the filter element holder (26) so as to secure the filter element (2) against displacement in the longitudinal direction, in particular against displacement in the insertion direction, and/or wherein the head structure (6) projects outwardly in the region of the sidewall (8), at least in a portion thereof, such that the head structure (6) forms a protrusion forming an end face (38) that is directed towards the foot end of the filter body and cooperates with a mating end face (34) formed on the filter element holder (26) to secure the filter element (29) against displacement in the longitudinal direction.

9. The filter element (2) according to any one of the preceding claims, wherein the filter body (4) and the head structure (6) are composed of plastic particles sintered together, and/or wherein the filter body (4) and the head structure (6) are manufactured by infrared sintering, and/or wherein the filter element (2) can be manufactured by an additive manufacturing process.

10. A combination of a filter element (2) according to any of claims 1 to 9 and a filter element holder (26; 70) into which the filter element (2) can be inserted, such that, in the inserted state, the filter element (2) separates a raw fluid space from a clean fluid space of a filter device,
wherein the sidewall (8) of the head structure (6) and a filter element receptacle (30; 78) cooperate to seal the filter element (2) with respect to the filter element holder (26; 70), in particular in cooperation with a sealing element (10) extending transversely to the longitudinal direction.

11. The combination according to claim 10, wherein the filter element holder comprises:
a support plate (28; 72) having at least one filter element receptacle (30; 78) into which the filter element (2) can be inserted such that the filter element (2) is seated with its head structure (6) in the filter element receptacle (30; 78),
wherein the filter element holder (26; 70) is configured such that the function of securely fastening and supporting the filter element in the filter element holder (26; 70) is performed by other structures of the head structure (6) of the filter element (2) than the seal (10).

12. The combination according to claim 10 or 11, **characterized in that**
the support plate (28; 72) comprises a stamped and/or deep-drawn sheet metal part, wherein the filter element receptacle (30) comprises a collar (40; 76) extending away from the support plate (28; 72) in the longitudinal direction, wherein the collar (40; 76) comprises a collar abutment surface (44; 80) adapted to cooperate with the seal (10) of the filter element (2) for sealing a raw fluid space from a clean fluid space; and/or
wherein a seal retaining structure, in particular a recess, is formed on the collar abutment surface (44; 80), which is adapted to receive the seal (10) provided on the sidewall (8) of the head structure (6);
wherein the seal retaining structure is in particular formed so as to extend over an entire circumference of the collar abutment surface (44, 80).

13. A filter device (100) comprising
a raw fluid space (108);
a clean fluid space (110);
wherein the filter device (100) comprises at least one combination of at least one filter element (2) and one filter element holder (26; 70) according to claim 12,
wherein the filter element (2) is inserted into a filter element receptacle (30; 80) formed in the filter element holder (26; 70) such that, in the inserted state, the filter element (2) separates the raw fluid space from the clean fluid space.

14. A method for manufacturing a filter element (2) according to any of claims 1 to 9, comprising
producing a throughflow-porous and inherently stable filter body (4), and
forming a head structure (6) on the filter body (4), wherein the head structure (6) comprises a sidewall (8) extending basically in the longitudinal direction;
wherein the head structure (6) is provided with at least one seal (10) configured to cooperate with a filter element holder (26; 70) of a filter device (100) so as to seal a clean fluid space from a raw fluid space of the filter device (100);
**characterized in that**
the seal (10) is formed on the basically longitudinally extending sidewall (8) of the head structure (6) of the filter element (2), and the head structure (6) is configured such that the function of securely fastening and supporting the filter element in the filter element holder (26; 70) is performed by other structures of the head structure (6) of the filter element (2) than the seal (10);
wherein the filter body (4) and the head structure (6) are manufactured in one piece by a sintering process, and the manufacture of the filter element (2) is automated.

15. The method according to claim 14, wherein the seal (10) comprises a sealing element (12) extending transversely to the longitudinal direction to seal the filter element (2) with respect to the filter element holder (26; 70), and/or wherein the head structure (6) is provided with a sidewall (8) basically extending in the longitudinal direction and the seal (10) is formed on said sidewall (8) extending basically in the longitudinal direction, and/or wherein the head structure (6) is formed so as to cooperate with the filter element holder (26; 70) of the filter device (100) to fix the filter element (2) in the filter element holder (26; 70), and/or wherein the filter body (4) and the head structure (6) are manufactured from plastic particles sintered together, and/or wherein the filter body (4) and the head structure (6) are manufactured by infrared sintering.

## Revendications

1. Élément filtrant (2) comprenant un corps filtrant (4) à pores traversants, s'étendant entre une extrémité supérieure et une extrémité inférieure situées à l'opposé l'une de l'autre dans le sens longitudinal ;
le corps filtrant (4) étant constitué d'un matériau particulaire fritté ;
une structure de tête (6) étant formée à l'extrémité supérieure de l'élément filtrant (2), qui comporte au moins un joint d'étanchéité (10) conçu pour assurer l'étanchéité de l'élément filtrant (2) par rapport à une fixation d'élément filtrant (26),
la structure de tête (6) comportant une paroi latérale (8) s'étendant essentiellement dans le sens longitudinal ;
**caractérisé en ce que** le joint d'étanchéité (10) est réalisé sur la paroi latérale (8) s'étendant essentiellement dans le sens longitudinal de la structure de tête (6) de l'élément filtrant (2) ;
le joint d'étanchéité (10) étant réalisé de manière à ce que la fonction consistant à fixer et à maintenir solidement l'élément filtrant dans une fixation d'élément filtrant (26 ; 70) soit assurée par d'autres structures de la structure de tête (6) que le joint d'étanchéité (10) ;
et la structure de tête (6) étant frittée d'un seul tenant avec le corps filtrant.

2. L'élément filtrant (2) selon la revendication 1, dans lequel le joint d'étanchéité (10) est réalisé sur la face extérieure de la paroi latérale (8) s'étendant dans le sens longitudinal de la structure de tête (6), s'étendant, au moins partiellement, autour d'une ouverture de sortie de fluide purifié (16) réalisée dans la structure de tête (6), notamment dans une paroi frontale disposée à l'extrémité supérieure du corps filtrant (2), et s'étendant notamment sur tout le pourtour de celle-ci.

3. L'élément filtrant (2) selon la revendication 1 ou 2, dans lequel le joint d'étanchéité (10) comporte un élément d'étanchéité (12) s'étendant transversalement par rapport au sens longitudinal et permettant d'assurer l'étanchéité de l'élément filtrant (2) par rapport à la fixation d'élément filtrant (26).

4. L'élément filtrant (2) selon la revendication 3, dans lequel la paroi latérale (8) présente, sur sa face extérieure, un renfoncement (11) destiné à recevoir l'élément d'étanchéité (12), le renfoncement (11) s'étendant notamment de manière essentiellement orthogonale au sens longitudinal, et la paroi latérale (8) comportant plusieurs renfoncements (11).

5. L'élément filtrant (2) selon la revendication 3 ou 4, dans lequel l'élément d'étanchéité (12) interagit avec la paroi latérale (8), en particulier avec le renfoncement (11), afin d'assurer l'étanchéité de l'élément filtrant (2) par rapport à la fixation d'élément filtrant (26), et dans lequel l'élément d'étanchéité (12) comprend notamment un joint torique, un joint delta, un joint en X, un joint en T, un joint en mousse ou un joint en fibres.

6. L'élément filtrant (2) selon l'une quelconque des revendications précédentes, dans lequel l'élément filtrant (2) comporte au moins trois parois latérales (22, 24), en particulier au moins quatre parois latérales (22, 24), ainsi qu'au moins une paroi d'extrémité inférieure qui relie entre elles les parois latérales (22, 24) à l'extrémité inférieure, l'élément filtrant (2) comportant notamment deux parois latérales larges (22) et deux parois latérales étroites (24) qui relient entre elles les deux parois latérales larges (22), une partie des parois latérales (22, 24) formant notamment le corps filtrant et une chambre de fluide purifié étant formée entre les parois latérales (22, 24), dans laquelle s'écoule un fluide purifié formé à partir d'un fluide brut après son passage à travers les parois latérales.

7. L'élément filtrant (2) selon la revendication 6, dans lequel au moins une des deux parois latérales larges (22) est réalisée en zigzag ou de forme ondulée, les crêtes et les creux de cette paroi latérale, une au moins, s'étendant essentiellement dans le sens longitudinal de l'élément filtrant (2), les crêtes et les creux s'aplatissant notamment dans la structure de tête (6) vers l'extrémité supérieure, de sorte qu'une sortie de fluide purifié (16) formée dans la structure de tête (6) présente essentiellement une section transversale rectangulaire pour l'écoulement du fluide purifié.

8. L'élément filtrant (2) selon l'une quelconque des revendications précédentes, dans lequel la structure de tête (6) est réalisée de manière à fixer l'élément filtrant (2) à la fixation d'élément filtrant (26), la structure de tête (6) formant notamment au moins une saillie (36) s'étendant vers l'extérieur, qui est conçue pour interagir avec une structure de retenue (32) formée sur la fixation d'élément filtrant (26) afin
d'empêcher l'élément filtrant (2) de se déplacer dans le sens longitudinal, en particulier dans le sens d'insertion, et/ou la structure de tête (6) faisant saillie vers l'extérieur dans la zone de la paroi latérale (8), au moins dans une partie de celle-ci, de sorte que la structure de tête (6) forme une saillie présentant une face frontale (38) orientée vers l'extrémité inférieure du corps filtrant, laquelle interagit avec une face frontale opposée (34) formée sur la fixation d'élément filtrant (26) afin d'empêcher l'élément filtrant (2) de se déplacer dans le sens longitudinal.

9. L'élément filtrant (2) selon l'une quelconque des revendications précédentes, dans lequel le corps filtrant (4) et la structure de tête (6) sont constitués de particules de matière plastique frittées, et/ou dans lequel le corps filtrant (4) et la structure de tête (6) sont fabriqués par frittage infrarouge, et/ou dans lequel l'élément filtrant (2) peut être fabriqué par un procédé de fabrication additive.

10. Combinaison d'un élément filtrant (2) selon l'une quelconque des revendications 1 à 9 et d'une fixation d'élément filtrant (26 ; 70) dans laquelle l'élément filtrant (2) peut être inséré, de telle sorte que, lorsqu'il est en place, l'élément filtrant (2) sépare une chambre de fluide brut d'une chambre de fluide purifié d'un dispositif de filtration,
la paroi latérale (8) de la structure de tête (6) et le logement d'élément filtrant (30 ; 78) interagissant pour assurer l'étanchéité de l'élément filtrant (2) par rapport à la fixation d'élément filtrant (26 ; 70), notamment en coopération avec un élément d'étanchéité (10) s'étendant transversalement au sens longitudinal.

11. La combinaison selon la revendication 10, dans laquelle la fixation d'élément filtrant comporte:
une plaque de support (28 ; 72) comportant au moins un logement d'élément filtrant (30 ; 78) dans lequel l'élément filtrant (2) peut être inséré, de telle sorte que l'élément filtrant repose par sa structure de tête (6) dans le logement d'élément filtrant (30 ; 78),
la fixation d'élément filtrant (26 ; 70) étant conçue de manière à ce que la fonction consistant à fixer et à loger solidement l'élément filtrant dans la fixation d'élément filtrant (26 ; 70) soit assurée par d'autres structures de la structure de tête (6) de l'élément filtrant (2) que le joint d'étanchéité (10).

12. La combinaison selon la revendication 10 ou 11, **caractérisée en ce que** la plaque de support (28 ; 72) comprend une tôle découpée et/ou emboutie, le logement d'élément filtrant (30) comportant une collerette (40 ; 76) qui s'étend dans le sens longitudinal à partir de la plaque de support (28 ; 72), la collerette (40 ; 76) comportant une surface d'appui (44 ; 80) conçue pour interagir avec le joint d'étanchéité (10) de l'élément filtrant (2), afin d'assurer l'étanchéité entre une chambre de fluide brut et une chambre de fluide purifié ; et/ou
dans laquelle une structure de maintien du joint, en particulier un renfoncement, est formée sur la surface d'appui de la collerette (44 ; 80), laquelle est conçue pour recevoir le joint d'étanchéité (10) prévu sur la paroi latérale (8) de la structure de tête (6) ;
la structure de maintien du joint étant notamment formée sur toute la périphérie de la surface d'appui de la collerette (44 ; 80).

13. Dispositif de filtration (100) présentant
une chambre de fluide brut (108) ;
une chambre de fluide purifié (110) ;
le dispositif de filtration (100) présentant au moins une combinaison d'au moins un élément filtrant (2) et une fixation d'élément filtrant (26 ;70) selon la revendication 12,
l'élément filtrant (2) étant inséré dans un logement d'élément filtrant (30 ; 80) formé dans la fixation d'élément filtrant (26 ; 70), et ce de telle sorte que, lorsqu'il est en place, l'élément filtrant (2) sépare la chambre de fluide brut de la chambre de fluide purifié.

14. Procédé de fabrication d'un élément filtrant (2) selon l'une quelconque des revendications 1 à 9, englobant
la fabrication d'un corps filtrant (4) à pores traversants et intrinsèquement stable et
la réalisation d'une structure de tête (6) sur le corps filtrant (4), la structure de tête (6) comportant une paroi latérale (8) s'étendant essentiellement dans le sens longitudinal ;
la structure de tête (6) étant pourvue d'au moins un joint d'étanchéité (10) conçu de manière à interagir avec une fixation d'élément filtrant (26 ; 70) d'un dispositif de filtration (100), afin d'assurer l'étanchéité entre une chambre de fluide purifié et une chambre de fluide brut du dispositif de filtration (100) ;
**caractérisé en ce que** le joint d'étanchéité (10) est réalisé sur la paroi latérale (8) s'étendant essentiellement dans le sens longitudinal de la structure de tête (6) de l'élément filtrant (2) et la structure de tête (6) est réalisée de manière à ce que la fonction consistant à fixer et à maintenir solidement l'élément filtrant dans une fixation d'élément filtrant (26 ; 70) soit assurée par d'autres structures de la structure de tête (6) de l'élément filtrant (2) que le joint d'étanchéité (10) ;
le corps filtrant (4) et la structure de tête (6) étant fabriqués d'un seul tenant par frittage, et la fabrication de l'élément filtrant (2) s'effectuant de manière automatisée.

15. Le procédé selon la revendication 14, dans lequel le joint d'étanchéité (10) comprend un élément d'étanchéité (12) s'étendant transversalement par rapport au sens longitudinal, afin d'assurer l'étanchéité de l'élément filtrant (2) par rapport à la fixation d'élément filtrant (26 ; 70), et/ou dans lequel la structure de tête (6) est pourvue d'une paroi latérale (8) s'étendant essentiellement dans le sens longitudinal et le joint d'étanchéité (10) est réalisé sur cette paroi latérale (8) s'étendant essentiellement dans le sens longitudinal, et/ou dans lequel la structure de tête (6) est conçue de manière à interagir avec la fixation d'élément filtrant (26 ; 70) du dispositif de filtration (100), afin de fixer l'élément filtrant (2) dans la fixation d'élément filtrant (26 ; 70), et/ou dans lequel le corps filtrant (4) et la structure de tête (6) sont fabriqués à partir de particules de matière plastique frittées, et/ou dans lequel le corps filtrant (4) et la structure de tête (6) sont fabriqués par frittage infrarouge.
